# EUROPEAN PATENT SPECIFICATION

(11) **EP 3 535 913 B1**
(45) Date of publication and mention of the grant of the patent: **11.05.2022**
(21) Application number: 17801809.9
(22) Date of filing: 03.11.2017
(51) Int. Cl.: H04L 5/00

(54) **DYNAMIC REFERENCE SIGNAL CONFIGURATION FOR SHORTENED TRANSMISSION TIME INTERVAL WIRELESS COMMUNICATIONS**
DYNAMISCHE REFERENZSIGNALKONFIGURATION FÜR DRAHTLOSE KOMMUNIKATION MIT VERKÜRZTEN ÜBERTRAGUNGSZEITINTERVALLEN
CONFIGURATION DE SIGNAL DE RÉFÉRENCE DYNAMIQUE DESTINÉE À DES COMMUNICATIONS SANS FIL À INTERVALLE DE TEMPS À TRANSMISSION RACCOURCIE

(30) Priority: 04.11.2016 US 201662418080 P; 02.11.2017 US 201715802349
(43) Date of publication of application: 11.09.2019
(60) Divisional application: 21190214.3
(73) Proprietor: Qualcomm Incorporated, San Diego, CA 92121-1714 (US)
(72) Inventor: PATEL, Shimman Arvind, San Diego, California 92121-1714 (US); HOSSEINI, Seyedkianoush, San Diego, California 92121-1714 (US); CHEN, Wanshi, San Diego, California 92121-1714 (US); SUN, Jing, San Diego, California 92121-1714 (US); GAAL, Peter, San Diego, California 92121-1714 (US)
(74) Representative: Dunlop, Hugh Christopher
(86) International application number: PCT/US2017/059977
(87) International publication number: WO 2018/085684

(56) References cited:
- LG ELECTRONICS: "Discussion on PUCCH design for HARQ-ACK in shortened TTI", 3GPP DRAFT; R1-163520 DISCUSSION ON PUCCH DESIGN FOR HARQ-ACK IN SHORTENED TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Busan, Korea; 20160411 - 20160415 18 April 2016 (2016-04-18), XP051097129, Retrieved from the Internet: URL:http://www.3gpp.org/ftp/tsg_ran/WG1_RL 1/TSGR1_84b/Docs/ [retrieved on 2016-04-18]
- HUAWEI ET AL: "Discussion on DL RS and UL RS for short TTI", 3GPP DRAFT; R1-156460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051002920, Retrieved from the Internet: URL:http://www.3gpp.org/ftp/Meetings_3GPP_ SYNC/RAN1/Docs/ [retrieved on 2015-11-15]

## Description

### BACKGROUND

The following relates generally to wireless communication, and more specifically to dynamic reference signal configuration for shortened transmission time interval wireless communications.

Wireless multiple-access technologies have been adopted in various telecommunication standards to provide a common protocol that enables different wireless devices to communicate on a municipal, national, regional, and even global level. An example telecommunication standard is Long Term Evolution (LTE). LTE is designed to improve spectral efficiency, lower costs, improve services, make use of new spectrum, and better integrate with other open standards. LTE may use orthogonal frequency division multiple access (OFDMA) on the downlink (DL), single-carrier frequency division multiple access (SC-FDMA) on the uplink (UL), and multiple-input multiple-output (MIMO) antenna technology.

In some examples, a wireless multiple-access communication system may include a number of base stations, each simultaneously supporting communication for multiple communication devices, otherwise known as user equipment (UEs). In a LTE or LTE-Advanced (LTE-A) network, a set of one or more base stations may define an eNodeB (eNB). In other examples (e.g., in a next generation new radio (NR) or 5G network), a wireless multiple access communication system may include a number of smart radio heads (RHs) in communication with a number of access node controllers (ANCs), where a set of one or more RHs, in communication with an ANC, defines a base station (e.g., an eNB or gNB). A base station may communicate with a set of UEs on DL channels (e.g., for transmissions from a base station to a UE) and UL channels (e.g., for transmissions from a UE to a base station).

A base station in some LTE or NR deployments may transmit to one or more UEs using a transmission time interval (TTI) that is reduced in length relative to legacy LTE TTIs. Such a TTI may be referred to as a shortened TTI (sTTI) and users communicating using sTTIs may be referred to as low latency users. An sTTI may be a subset of one or more subframes that correspond to legacy TTI subframes. A base station may allocate transmission resources for sTTIs to a UE that may include time and/or frequency resources. Efficient allocation of such resources for data, control information, and reference signal transmissions may help to increase the efficiency of a wireless communications system.

LG ELECTRONICS: "Discussion on PUCCH design for HARQACK in shortened TTI", 3GPP DRAFT; R1-163520 DISCUSSION ON PUCCH DESIGN FOR HARO-ACK IN SHORTENED TTI, 3RD GENERATION PARTNERSHIP PROJECT (3GPP), MOBILE COMPETENCE CENTRE; 650, ROUTE DES LUCIOLES; F-06921 SOPHIAANTIPOLIS, vol. RAN WG1, no. Busan, Korea; 20160411-20160415; 18 April 2016 (2016-04-18), XP051097129 discusses some issues related to PUCCH format for latency reduction, and also provides related suggestions to solve those issues.

HUAWEI ET AL: "Discussion on DL RS and UL RS for short TTI", 3GPP DRAFT; R1-156460, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Anaheim, USA; 20151115-20151122; 15 November 2015 (2015-11-15), XP051002920 discusses the DL RS and UL RS for short TTI transmission and made some observations and proposals to solve the issues observed.

### SUMMARY

The invention is described in the appended claims.

### BRIEF DESCRIPTION OF THE DRAWINGS

FIG. 1 illustrates an example of a system for wireless communication that supports dynamic reference signal configuration for shortened transmission time interval wireless communications in accordance with aspects of the present disclosure.
FIG. 2 illustrates an example of a wireless communications system that supports dynamic reference signal configuration for shortened transmission time interval wireless communications in accordance with aspects of the present disclosure.
FIG. 3 illustrates an example of shortened transmission time interval (sTTI) patterns for slot-aligned sTTIs that support dynamic reference signal configuration for shortened transmission time interval wireless communications in accordance with aspects of the present disclosure.
FIG. 4 illustrates an example of two-symbol sTTI data and demodulation reference signals (DMRS) patterns that support dynamic reference signal configuration for shortened transmission time interval wireless communications in accordance with aspects of the present disclosure.
FIG. 5 illustrates an example of three-symbol sTTI data and DMRS patterns that support dynamic reference signal configuration for shortened transmission time interval wireless communications in accordance with aspects of the present disclosure.
FIG. 6 illustrates an example of cross-subframe scheduling that supports dynamic reference signal configuration for shortened transmission time interval wireless communications in accordance with aspects of the present disclosure.
FIG. 7 illustrates an example of a process flow that supports dynamic reference signal configuration for shortened transmission time interval wireless communications in accordance with aspects of the present disclosure.
FIGs. 8 through 10 show block diagrams of a device that supports dynamic reference signal configuration for shortened transmission time interval wireless communications in accordance with aspects of the present disclosure.
FIG. 11 illustrates a block diagram of a system including a base station that supports dynamic reference signal configuration for shortened transmission time interval wireless communications in accordance with aspects of the present disclosure.
FIGs. 12 through 14 show block diagrams of a device that supports dynamic reference signal configuration for shortened transmission time interval wireless communications in accordance with aspects of the present disclosure.
FIG. 15 illustrates a block diagram of a system including a UE that supports dynamic reference signal configuration for shortened transmission time interval wireless communications in accordance with aspects of the present disclosure.
FIGs. 16 through 21 illustrate methods for dynamic reference signal configuration for shortened transmission time interval wireless communications in accordance with aspects of the present disclosure.

### DETAILED DESCRIPTION

Improved methods, systems, devices, or apparatuses of various examples may be used to support dynamic reference signal configuration for shortened transmission time interval (sTTI) communications in low latency wireless communications systems. Resources allocated for low latency communication may be used for uplink and downlink communication using sTTIs that have a reduced length relative to TTIs of communications that may be relatively latency insensitive, such as enhanced mobile broadband (eMBB) transmissions that may use a 1 ms TTI duration. Communications using sTTIs may use, in some cases, a sTTI duration that corresponds to one slot of a wireless subframe, or a sTTI duration that corresponds to two or three orthogonal frequency division multiplexing (OFDM) symbols, for example. In some cases, sTTIs may be configured to have boundaries within or aligned with boundaries of a slot of a 1 ms TTI. In some examples, the sTTIs may span two or three OFDM symbols, and each slot may have two two-symbol TTIs and one three-symbol TTI. In such a manner, all seven symbols of a slot using a normal cyclic prefix may be utilized and system resources may be more efficiently utilized relative to a case where three two-symbol sTTIs would be included in a seven-symbol slot.

Various techniques as disclosed herein may provide for dynamically configuring DMRS transmissions for sTTIs based on a location of a sTTI within a subframe, other uplink transmission resources that may be allocated to a user equipment (UE), pilot signals that may be transmitted using resources of a sTTI, other reference signals (e.g., sounding reference signal (SRS) transmissions), mobility of the UE, other processing timelines, or any combination thereof. A pattern of reference signal symbols, data symbols, and null symbols may be identified, and provided to the UE as a reference signal configuration along with an allocation of uplink resources for one or more sTTI. The UE receives the reference signal configuration and allocation of uplink resources, and may transmit uplink communications using the allocated uplink resources. The reference signal configuration, such as a demodulation reference signal (DMRS) configuration, is identified dynamically by a base station and signaled to the UE. Reference signals from two or more UEs may, in some cases, be multiplexed (e.g., by applying different cyclic shifts at each UE) and transmitted using reference signal resources for a sTTI.

Such low latency communications may be used in systems, for example, that may support multiple different services for data communications that may be selected depending upon the nature of the communications. For example, communications that require low latency and high reliability, sometimes referred to as mission critical (MiCr) communications, may be served through a lower-latency service (e.g., an ultra-reliable low-latency communication (URLLC) service) that uses sTTIs. Correspondingly, communications that are more delay-tolerant may be served through a service that provides relatively higher throughput with somewhat higher latency, such as a mobile broadband service (e.g., an eMBB service) that uses 1 ms TTIs. In other examples, communications may be with UEs that are incorporated into other devices (e.g., meters, vehicles, appliances, machinery, etc.), and a machine-type communication (MTC) service (e.g., massive MTC (mMTC)) may be used for such communications. In some cases, different services (e.g., eMBB, URLLC, mMTC) may have different TTIs, different sub-carrier (or tone) spacing and different cyclic prefixes.

The present disclosure describes various techniques with reference to next generation networks (e.g., 5G or NR networks) that are being designed to support features such as high bandwidth operations, more dynamic subframe/slot types, and self-contained subframe/slot types (in which HARQ feedback for a subframe/slot may be transmitted before the end of the subframe/slot). However, such techniques may be used for any system in which TTIs of different lengths may be transmitted in a wireless communications system.

Aspects of the disclosure are initially described in the context of a wireless communications system. Various examples of DMRS configurations for different sTTIs are then discussed. Aspects of the disclosure are further illustrated by and described with reference to apparatus diagrams, system diagrams, and flowcharts that relate to dynamic reference signal configuration for shortened transmission time interval wireless communications.

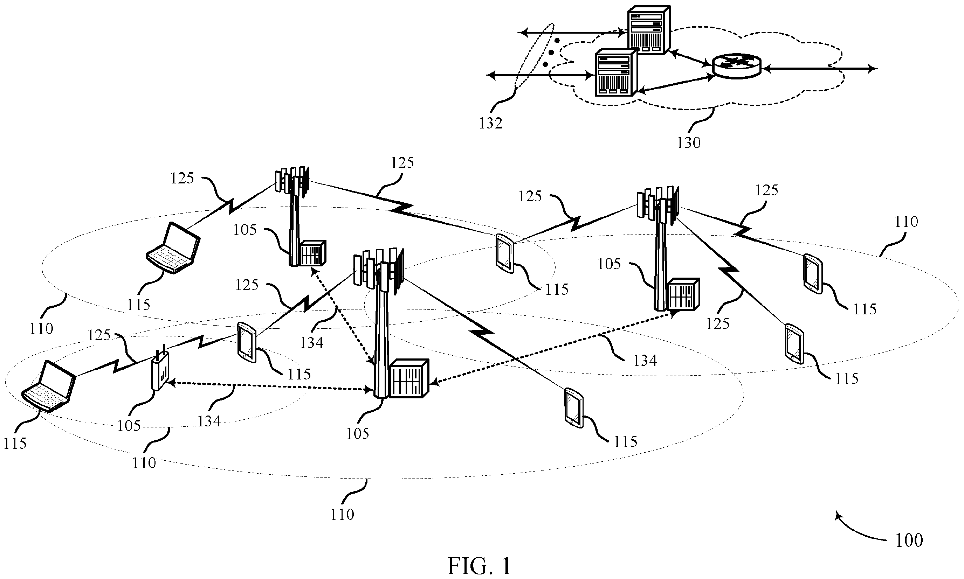

**FIG.** 1 illustrates an example of a wireless communications system 100 in accordance with various aspects of the present disclosure. The wireless communications system 100 includes base stations 105, UEs 115, and a core network 130. In some examples, the wireless communications system 100 may be a LTE (or LTE-Advanced) network, or a New Radio (NR) network. In some cases, wireless communications system 100 may support enhanced broadband communications, ultra-reliable (e.g., mission critical) communications, low latency communications, and communications with low-cost and low-complexity devices. Wireless communications system 100 may provide for dynamic configuration of reference signal transmissions, such as DMRS transmissions, when using sTTIs.

Base stations 105 may wirelessly communicate with UEs 115 via one or more base station antennas. Each base station 105 may provide communication coverage for a respective geographic coverage area 110. Communication links 125 shown in wireless communications system 100 may include uplink (UL) transmissions from a UE 115 to a base station 105, or downlink (DL) transmissions, from a base station 105 to a UE 115. Control information and data may be multiplexed on an uplink channel or downlink according to various techniques. Control information and data may be multiplexed on a downlink channel, for example, using time division multiplexing (TDM) techniques, frequency division multiplexing (FDM) techniques, or hybrid TDM-FDM techniques. In some examples, the control information transmitted during a TTI of a downlink channel may be distributed between different control regions in a cascaded manner (e.g., between a common control region and one or more UE-specific control regions).

UEs 115 may be dispersed throughout the wireless communications system 100, and each UE 115 may be stationary or mobile. A UE 115 may also be referred to as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may also be a cellular phone, a personal digital assistant (PDA), a wireless modem, a wireless communication device, a handheld device, a tablet computer, a laptop computer, a cordless phone, a personal electronic device, a handheld device, a personal computer, a wireless local loop (WLL) station, an Internet of things (IoT) device, an Internet of Everything (IoE) device, a machine type communication (MTC) device, an appliance, an automobile, a drone, or the like.

In some cases, a UE 115 may also be able to communicate directly with other UEs (e.g., using a peer-to-peer (P2P) or device-to-device (D2D) protocol). Some UEs 115, such as MTC or IoT devices, may be low cost or low complexity devices, and may provide for automated communication between machines, i.e., Machine-to-Machine (M2M) communication. M2M or MTC may refer to data communication technologies that allow devices to communicate with one another or a base station without human intervention. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

In some cases, an MTC device may operate using half-duplex (one-way) communications at a reduced peak rate. MTC devices may also be configured to enter a power saving "deep sleep" mode when not engaging in active communications. In some cases, MTC or IoT devices may be designed to support mission critical functions and wireless communications system may be configured to provide ultra-reliable and low latency communications for these functions.

Base stations 105 may communicate with the core network 130 and with one another. For example, base stations 105 may interface with the core network 130 through backhaul links 132 (e.g., S1, etc.). Base stations 105 may communicate with one another over backhaul links 134 (e.g., X2, etc.) either directly or indirectly (e.g., through core network 130). Base stations 105 may perform radio configuration and scheduling for communication with UEs 115, or may operate under the control of a base station controller (not shown). In some examples, base stations 105 may be macro cells, small cells, hot spots, or the like. Base stations 105 may be an example of a LTE eNB, an eLTE eNB, an NR gNB, an NR Node-B, an NR access node, and may include an access node controller (ANC).

A base station 105 may interface with the core network 130 through backhaul links 132 (e.g., S1, S2, NG-1, NG-2, NG-3, NG-C, NG-U, etc.) and may perform radio configuration and scheduling for communication with the UEs 115 within an associated coverage area 110. In various examples, the base stations 105 may communicate, either directly or indirectly (e.g., through core network 130), with each other over backhaul links 134 (e.g., X1, X2, Xn, etc.), which may be wired or wireless communication links. Each base station 105 may also communicate with a number of UEs 115 through a number of other network devices, where a network device may be an example of a transmission reception point (TRP), a distributed unit (DU), a radio head (RH), a remote radio head (RRH), or a smart radio head.

Wireless communications system 100 may support operation on multiple cells or carriers, a feature which may be referred to as carrier aggregation (CA) or multi-carrier operation. A carrier may also be referred to as a component carrier (CC), a layer, a channel, etc. The terms "carrier," "component carrier," "cell," and "channel" may be used interchangeably herein. A UE 115 may be configured with multiple downlink CCs and one or more uplink CCs for carrier aggregation. Carrier aggregation may be used with both FDD and TDD component carriers.

In some cases, wireless communications system 100 may utilize enhanced component carriers (eCCs). An eCC may be characterized by one or more features including: wider bandwidth, shorter symbol duration, and shorter transmission time interval (TTIs). In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (where more than one operator is allowed to use the spectrum). In some cases, an eCC may utilize a different symbol duration than other CCs, which may include use of a reduced symbol duration as compared with symbol durations of the other CCs. A shorter symbol duration is associated with increased subcarrier spacing. A device, such as a UE 115 or base station 105, utilizing eCCs may transmit wideband signals (e.g., 20, 40, 60, 80 MHz, etc.) at reduced symbol durations (e.g., 16.67 microseconds). A TTI in eCC may consist of one or multiple symbols. In some cases, the TTI duration (that is, the number of symbols in a TTI) may be variable. A 5G or NR carrier may be considered an eCC.

In some cases, wireless communications system 100 may utilize both licensed and unlicensed radio frequency spectrum bands. For example, wireless communications system 100 may employ LTE License Assisted Access (LTE-LAA) or LTE Unlicensed (LTE U) radio access technology or NR technology in an unlicensed band such as the 5 GHz Industrial, Scientific, and Medical (ISM) band. When operating in unlicensed radio frequency spectrum bands, wireless devices such as base stations 105 and UEs 115 may employ listen-before-talk (LBT) procedures to ensure the channel is clear before transmitting data. In some cases, operations in unlicensed bands may be based on a CA configuration in conjunction with CCs operating in a licensed band. Operations in unlicensed spectrum may include downlink transmissions, uplink transmissions, or both. Duplexing in unlicensed spectrum may be based on frequency division duplexing (FDD), time division duplexing (TDD) or a combination of both.

Time intervals in LTE or NR may be expressed in multiples of a basic time unit (which may be a sampling period of Tₛ = 1/30,720,000 seconds). Time resources in LTE/LTE-A may be organized according to radio frames of length of 10ms (T_{f} = 307200Tₛ), which may be identified by a system frame number (SFN) ranging from 0 to 1023. Each frame may include ten 1ms subframes numbered from 0 to 9. A subframe may be further divided into two 0.5ms slots, each of which contains 6 or 7 modulation symbol periods (depending on the length of the cyclic prefix prepended to each symbol). Excluding the cyclic prefix, each symbol contains 2048 sample periods. In some cases the subframe may be the smallest scheduling unit, also known as a TTI. In other cases, a TTI may be shorter than a subframe or may be dynamically selected (e.g., in sTTI bursts or in selected component carriers using sTTIs). Various examples discussed herein provide techniques for shortened TTIs, which may provide reference signal configuration for sTTIs that may be used to provide reliable DMRS transmissions that may be used when demodulating sTTI uplink transmissions from a UE 115.

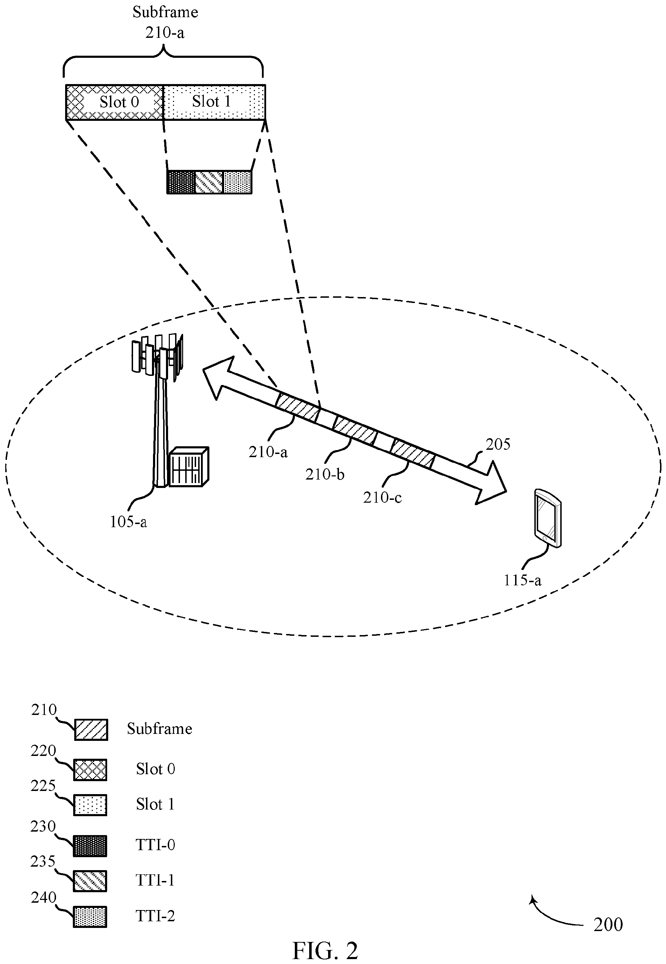

**FIG. 2** illustrates an example of a wireless communications system 200 for dynamic reference signal configuration for shortened transmission time interval wireless communications. Wireless communications system 200 includes base station 105-a and UE 115-a, which may be examples of aspects of a UE 115 as described above with reference to FIG. 1. In the example of FIG. 2, the wireless communications system 200 may operate according to a radio access technology (RAT) such as a 5G or NR RAT, although techniques described herein may be applied to any RAT and to systems that may concurrently use two or more different RATs.

Base station 105-a may communicate with UE 115-a over carrier 205. In some examples, base station 105-a may allocate resources for communication with UEs over carrier 205. For example, base station 105-a may allocate subframes 210 for communication with UE 115-a, and one or more subframes 210 may correspond to a legacy LTE TTI of 1 ms. In this example, subframes 210 may include a first subframe 210-a, a second subframe 210-b, and a third subframe 210-c. Each of the subframes 210 may include two slots, in which each slot may have seven symbols for a normal cyclic prefix. In this example, a first slot (slot 0) 220 and a second slot (slot 1) 225 may be included in the first subframe 210-a.

As indicated above, in the uplink of a low latency system, different sTTI lengths may be used for transmissions over carrier 205. For example, two-symbol sTTI and 1-slot sTTI durations may be supported for physical uplink control channel (PUCCH) and physical uplink shared channel (PUSCH) transmissions (or shortened PUCCH (sPUCCH) and shortened PUSCH (sPUSCH) transmissions). Thus, within first slot 220 or second slot 225, there may be multiple sTTIs, such as a first sTTI (TTI-0) 230, a second sTTI (TTI-1) 235, and a third sTTI (TTI-2) 240, that may each have a two or three OFDM symbol duration. While various examples discussed herein are described with respect to uplink communications, such techniques may also apply to downlink communications in some examples. When two-symbol sTTI is used, in some cases it may be desirable to have a fixed sTTI structure in which sTTI boundaries lie within slot boundaries or are aligned with slot boundaries, such as the boundaries of the first slot 220 or second slot 225, which may be referred to as slot-aligned sTTIs. As discussed above, when using a normal CP, seven symbols are included in each of the first slot 220 or second slot 225, and thus each slot may include three sTTIs for slot-aligned sTTIs. In some cases, one of the sTTIs may be configured as a three-symbol TTI, so as to efficiently utilize each symbol of each slot. In such cases, different patterns can be considered, such as having the three-symbol TTI located at the end of the first slot 220 or second slot 225, or at the beginning of the first slot 220 or second slot 225.

As the TTI length gets shorter, it may not always possible to reuse the legacy DMRS pattern, as a particular sTTI may not include a legacy DMRS symbols (symbol 3 of each slot). For example, a 2-symbol sPUSCH covering symbols 0 and 1 of a subframe does not include a legacy DMRS symbol. Various aspects of the present disclosure provide that DMRS configurations for sTTIs may be dynamically configured to provide efficient data transmissions with sufficient DMRS transmissions. Various configurations may be identified and one of the configurations selected for an sTTI based on various factors, that may allow DMRS sharing across multiple sTTIs and/or multiple UEs 115. DMRS sharing may be beneficial to help reduce overhead for uplink transmissions, as of one symbol of each two-symbol sTTI being reserved for DMRS may incur an overhead that is relatively high.

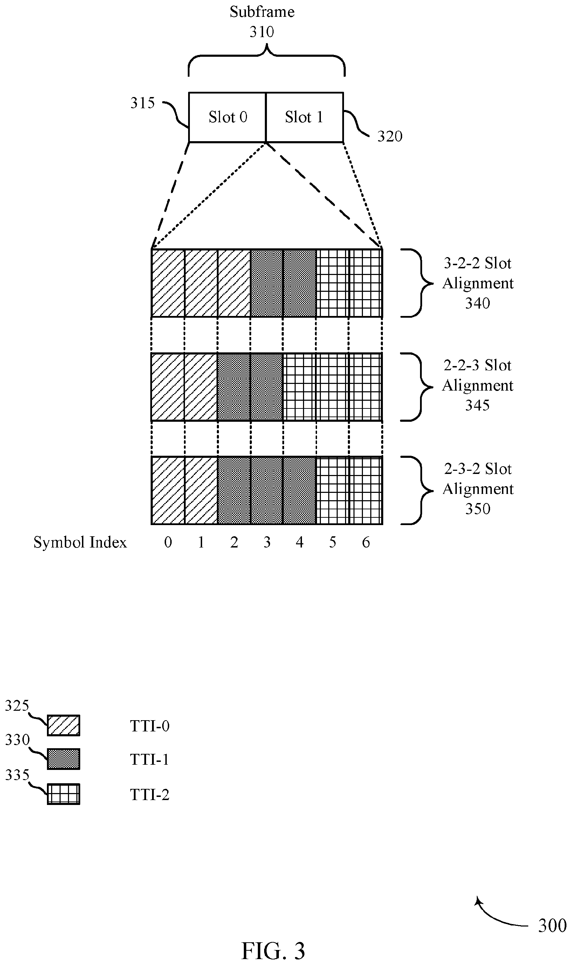

**FIG. 3** illustrates an example of slot-aligned sTTI patterns 300 for dynamic reference signal configuration for shortened transmission time interval wireless communications. Slot-aligned sTTI patterns 300 may be used for low latency communications between a UE and a base station such as discussed above with respect to FIGs. 1 and 2. A subframe 310 may have resources allocated for uplink communication. Subframe 310 may include two slots: first slot (slot 0) 315 and second slot (slot 1) 320 that may correspond to legacy LTE slots. Each of the first slot 315 and the second slot 320 may include slot-aligned sTTIs allocated for low latency communication. Each of the first slot 315 and the second slot 320 may include three sTTIs, including a first TTI (TTI-0) 325, a second TTI (TTI-1) and a third TTI (TTI-2) 335. In some examples, the TTIs 325 through 335 may be aligned in a 3-2-2 slot alignment 340, in which the first TTI 325 may include three symbols, the second TTI 330 may include two symbols, and the third TTI 335 may include two symbols.

In other examples, the TTIs 325 through 335 may be aligned in a 2-2-3 slot alignment 345, in which the first TTI 325 may include two symbols, the second TTI 330 may include two symbols, and the third TTI 335 may include three symbols. In other examples, the TTIs 325 through 335 may be aligned in a 2-3-2 slot alignment 350, in which the first TTI 325 may include two symbols, the second TTI 330 may include three symbols, and the third TTI 335 may include two symbols. Of course, other alignment patterns may be used for communications, and the illustrated slot alignment 340 through 350 are provided for purposes of illustration and discussion. Additionally, the first slot 315 may use a different slot alignment than the second slot 320. For example, each of the first slot 315 and the second slot 320 may use the 3-2-2 slot alignment 340 or may use the 2-2-3 slot alignment 345. Alternatively, the first slot 315 may use a 3-2-2 slot alignment 340 and the second slot may use the 2-2-3 slot alignment 345. Other combinations may be used as well, including combinations with different slot alignments.

As can be seen from above, in order to make sure that the sTTIs do not cross the slot boundary within the 1 ms subframe, both 2-symbol and 3-symbol sTTIs may be used within a slot. In various examples, dynamic DMRS positioning may be used that is designed to cover various different sTTI durations and allow DMRS sharing between sTTIs and/or UEs. In some cases, a base station 105-a may schedule multiple sTTIs in which a DMRS transmission of a first sTTI may be used for demodulation of the first sTTI and one or more other sTTIs. The base station 105-a may dynamically schedule uplink DMRS positions via, for example, a sPDCCH uplink grant. Additionally, in some cases, different UEs may be configured to multiplex their DMRSs over a same DMRS symbol using different cyclic shifts. Thus, overhead associated with DMRS transmissions may be reduced compared to cases where TTIs and/or UEs do not share DMRS transmissions, and network efficiency can be increased.

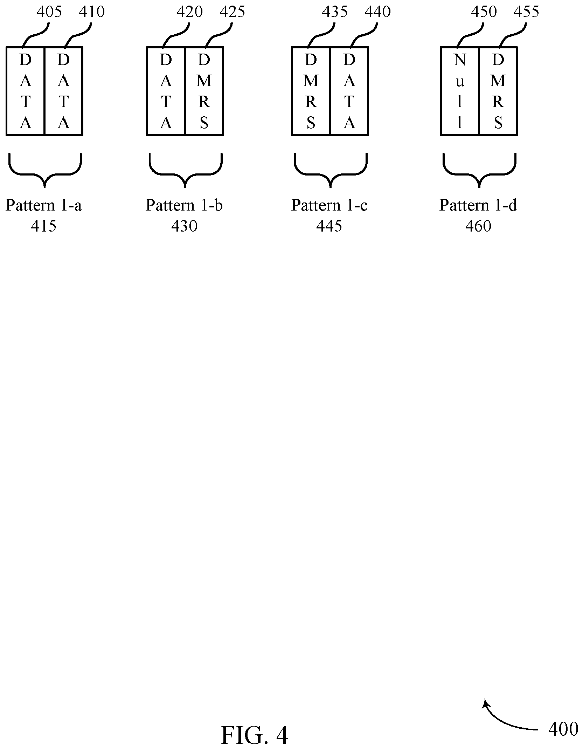

**FIG. 4** illustrates an example of two-symbol sTTI data and DMRS patterns 400 for dynamic reference signal configuration for shortened transmission time interval wireless communications in accordance with aspects of the present disclosure. DMRS patterns 400 may be used as DMRS configurations in uplink transmissions between UEs 115 and base stations 105 such as discussed above with reference to FIGs. 1-2.

In one example of FIG. 4, a two-symbol sTTI may include a first symbol 405 configured for data transmissions and a second symbol 410 configured for data transmissions, illustrated as pattern 1-a 415. In another example, a two-symbol sTTI may include a first symbol 420 configured for data transmissions and a second symbol 425 configured for DMRS transmissions, illustrated as pattern 1-b 430. In a third example, a two-symbol sTTI may include a first symbol 435 configured for DMRS transmissions and a second symbol 440 configured for data transmissions, illustrated as pattern 1-c 445. In a fourth example, a two-symbol sTTI may include a first symbol 450 configured as a null symbol without any transmissions by a UE, and a second symbol 440 configured for DMRS transmissions, illustrated as pattern 1-d 445. Other patterns may also be used, and DMRS patterns 400 are provided for purposes of illustration and discussion with the understanding that other patterns may be desirable is some cases.

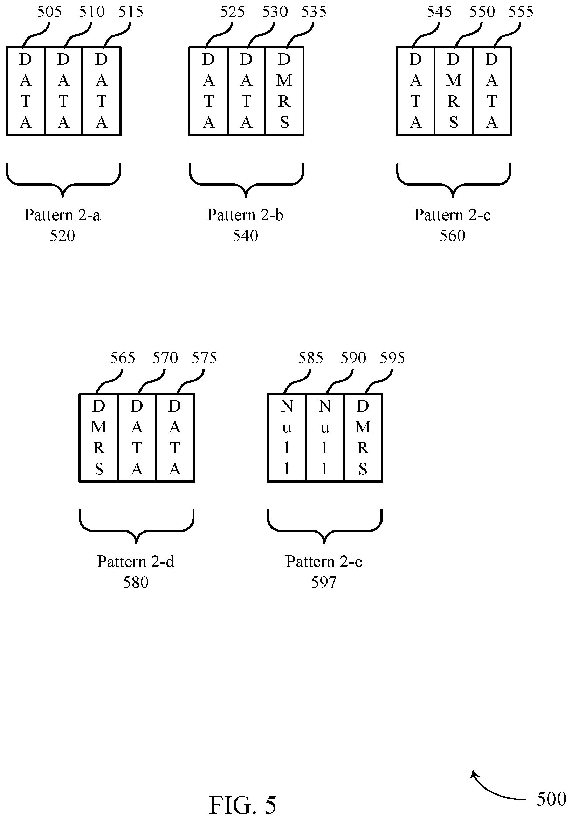

**FIG. 5** illustrates an example of a three-symbol sTTI data and DMRS patterns 500 for dynamic reference signal configuration for shortened transmission time interval wireless communications. DMRS patterns 500 may be used as DMRS configurations in uplink transmissions between UEs 115 and base stations 105 such as discussed above with reference to FIGs. 1-2.

In one example of FIG. 5, a three-symbol sTTI may include a first symbol 505 configured for data transmissions, a second symbol 510 configured for data transmissions, and a third symbol 515 configured for data transmissions, as illustrated as pattern 2-a 520. In another example, a three-symbol sTTI may include a first symbol 525 configured for data transmissions, a second symbol 530 configured for data transmissions, and a third symbol 535 configured for DMRS transmissions, illustrated as pattern 2-b 540. In a third example, a three-symbol sTTI may include a first symbol 545 configured for data transmissions, a second symbol 550 configured for DMRS transmissions and a third symbol 555 configured for data transmissions, illustrated as pattern 2-c 560. In a fourth example, a three-symbol sTTI may include a first symbol 565 configured for DMRS transmissions, a second symbol 570 configured for data transmissions and a third symbol 575 configured for data transmissions, illustrated as pattern 2-d 580. In a fifth example, a three-symbol sTTI may include a first symbol 585 and a second symbol 590 both configured as null symbols without any transmissions by a UE, and a third 595 configured for DMRS transmissions, illustrated as pattern 2-e 597. Other patterns may also be used, and DMRS patterns 500 are provided for purposes of illustration and discussion with the understanding that other patterns may be desirable is some cases.

Using the patterns of FIGs. 4 and 5, a large variety of sPUSCH and DMRS sequences can be created via multiple sequential uplink grants. For example, a base station may configure a first sTTI as a two-symbol sTTI using pattern 1-b 430 and a second sTTI as a two-symbol sTTI using pattern 1-a 415. In this example, the DMRS transmission provided in the first sTTI may be used for demodulation of both the first sTTI and the second sTTI. In some examples, null symbols may be configured according to pattern 1-d 460 and pattern 2-e 597, and may be defined to trigger a DMRS transmission to be used in one or more subsequent sTTIs. In some examples, since no uplink data is transmitted when these two patterns are configured, the related bit fields within the uplink grant can either be considered as invalid or can be reinterpreted in some different ways.

In some examples, a second UE may be configured to transmit a DMRS using one of the null symbol patterns 460 or 597 concurrently with a first UE that is transmitting data in the non-DMRS symbols. The first and second UEs in such cases may use different cyclic shifts for their respective DMRS transmissions. In order to enable early DMRS transmission via a pattern that uses null symbols, two grants may be provided to a UE, a first grant for the sTTI with one or more null symbols, and a second grant for a sTTI with an uplink data transmission and which may optionally also have a DMRS transmission (e.g., in order to provide enhanced DMRS-based demodulation in cases where the UE has high mobility). In some cases, such as pattern 2-d 580, since the data symbols are shifted to the right by one symbol, a processing timeline may be adjusted to provide processing of the shifted data symbols. For example, instead of a processing timeline of n + 4 for providing HARQ feedback, a processing timeline of n + 5 may be configured.

The configured pattern, as indicated above, may be selected based on one or more different factors, such as other sTTI transmissions of a UE. In some examples, a selected pattern may be based on the position of the sTTI within the 1ms subframe. For example, if the sTTI is located at the end of slot 1 of a subframe that is not configured for a SRS transmission, the sTTI may be selected to be a three-symbol TTI with pattern 2-a 520 or pattern 2-d 580. If such a subframe is configured for a SRS transmission, the three-symbol sTTI effectively becomes a two-symbol sTTI, and pattern 1-a 415 or pattern 1-c 445 may be configured, for example. As discussed above, the DMRS configuration for a sTTI may be indicated in downlink control information (DCI) provided by a base station, that may provide a sPDCCH uplink grant and an indication of a DMRS configuration.

In cases where a DMRS symbol is shared across multiple sTTIs, the future DMRSs may not be used for data demodulation in instances where this would increase a delay in processing of a sTTI. However, in various cases, a DMRSs over a current sTTI and/or a DMRS of a prior sTTI may be considered for data demodulation. For example, if a first sTTI uses pattern 1-b 430, and a second sTTI uses pattern 1-b 430, demodulation of the first sTTI, eNB may not wait to receive the DMRS symbol over the second sTTI, but demodulation of the second sTTI may use both the DMRS symbol of the first TTI and the DMRS symbol of the second sTTI. As a result, the performance of these two sTTIs may be uneven, and in such cases a base station may configure these sTTIs with different MCSs. For example, such a base station may choose a smaller MCS index over the first sTTI and a larger MCS index over the second sTTI.

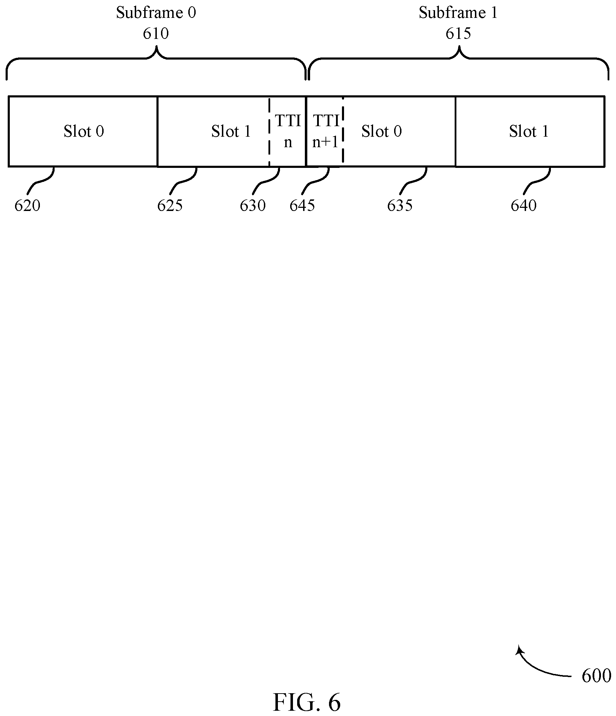

**FIG. 6** illustrates an example of cross-subframe scheduling 600 for dynamic reference signal configuration for shortened transmission time interval wireless communications. Cross-subframe scheduling 600 may be used, in some examples, in uplink transmissions that span multiple subframes between UEs 115 and base stations 105 such as discussed above with reference to FIGs. 1-2.

In this example, a first subframe (subframe 0) 610 and a second subframe (subframe 1) 615 may include allocated resources for uplink transmissions of a UE. The first subframe 610 may include a first slot (slot 0) 620 and a second slot (slot 1) 625, and within the second slot 625, TTI *n* 630 may be located at an end of the second slot 625. Within the second subframe 615 may be a first slot (slot 0) 635 and a second slot (slot 1) 640, and TTI *n*+*1* may be located at the beginning of the first slot 635. In some cases, for the demodulation of the sTTIs sent in the second subframe 615, such as TTI *n*+ *1* 645*,* one or more DMRSs sent in the first subframe 610, such as in TTI *n* 630, may be used. For example, TTI *n* 630 may be a three-symbol sTTI that is configured for pattern 2-b 540 or pattern 2-e 597. TTI *n*+*1* 645 may also be a three-symbol sTTI and may be configured for pattern 2-b 540. For the demodulation of the second sTTI, both DMRSs can be used. In this case, the effective uplink pattern for the second sTTI is [DMRS; data; data; DMRS] which may be beneficial in high mobility scenarios.

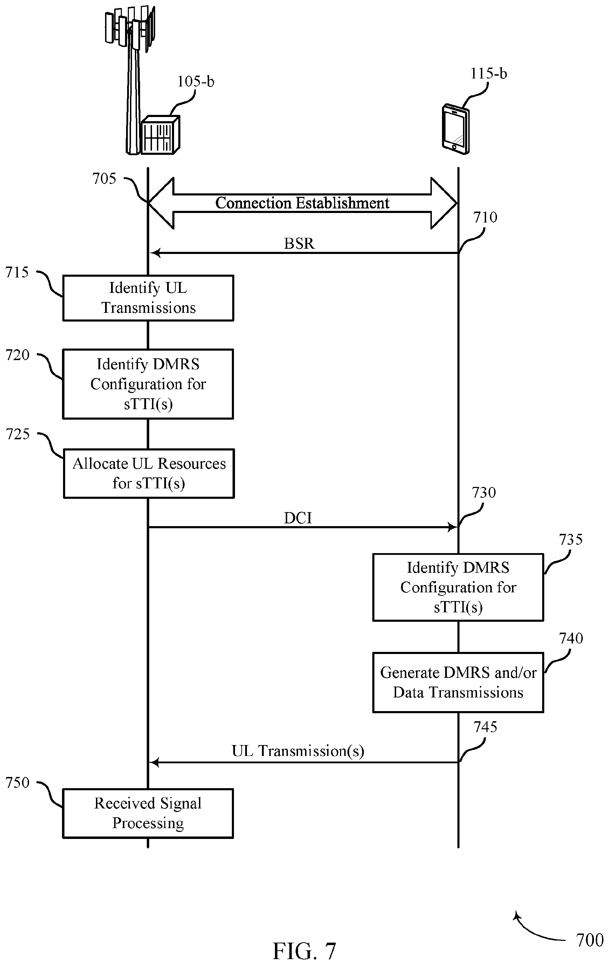

**FIG. 7** illustrates an example of a process flow 700 for dynamic reference signal configuration for shortened transmission time interval wireless communications. Process flow 700 may include a base station 105-b, and a UE 115-b, which may be examples of the corresponding devices described with reference to FIG. 1-2. The base station 105-b and the UE 115-b may establish a connection 705 according to established connection establishment techniques for the wireless communications system. The UE 115-b may transmit, in some examples, a buffer status report (BSR) that may indicate the presence of uplink data for transmission, and may also indicate that a service for the data is a low-latency service or other service that may use sTTIs.

At block 715, base station 105-b may identify uplink transmissions to be transmitted by the UE 115-a. For example, the base station 105-b may identify that the uplink data indicated by the UE 115-b may take a number of sTTIs to transmit, which may be determined based on various factors such as channel conditions between the base station 105-b and the UE 115-b, a MCS supported by the channel used for transmissions, a MIMO configuration, etc.

At block 720, the base station may identify a DMRS configuration for the one or more sTTIs. Such a DMRS configuration may be identified to provide a sufficient number of DMRS transmissions for one or more sTTIs to support demodulation of each of the sTTIs. For example, if the base station 105-b determines that two 2-symbol sTTIs are to be used for uplink transmissions the first sTTI may be configured with a DMRS symbol and the second sTTI may be configured with only data symbols.

At block 725, the base station 105-b may allocate uplink resources for the identified sTTIs, which may include an allocation for at least a first sTTI and a sTTI in some examples. The allocation of resources may be determined based on a number of data symbols needed to service the UE 115-b uplink data and a number of DMRS symbols needed for reliable demodulation of the uplink transmissions. For example, if the UE 115-b is relatively close to the base station 105-b and traveling at a relatively low speed (or not at all), the base station 105-b may select a sequence of DMRS patterns that includes relatively few DMRS symbols. Alternatively, if the UE 115-b is relatively far from the base station 105-b (e.g., a cell-edge UE) and/or traveling at a relatively high rate of speed, the base station 105-b may select a sequence of DMRS patterns for the sTTIs that may provide more DMRS transmissions, which may be used to more reliably demodulate the uplink transmissions and enhance the likelihood of successful reception of such signals.

The base station 105-b may transmit DCI 730 to the UE 115-b. The DCI 730 may include, for example, a sPDCCH uplink grant that indicates allocated uplink resources for a particular sTTI and the DMRS configuration for the sTTI. In some cases, where UE 115-b is scheduled for multiple sTTIs, multiple uplink grants may be provided that dynamically schedule uplink DMRS positions for the different sTTIs. Also, as indicated above, in some cases the base station 105-b may allocate resources to a second UE (not shown) to allow the second UE to transmit a DMRS concurrently with a DMRS of the UE 115-b. In such cases, the second UE may use a different cyclic shift for the DMRS transmission than the UE 115-b. In some cases, the second UE may be scheduled for the DMRS transmission using a DMRS pattern with null symbols, and the second UE may reinterpret the uplink grant with an indication of null symbols to indicate that a particular cyclic shift is to be used for the DMRS transmission. Such a cyclic shift may be preconfigured, provided using RRC signaling, or provided in the uplink grant.

At block 735, the UE 115-a may identify the DMRS configuration for the sTTI(s). For example, the UE 115-a may receive the DCI 730 that includes an allocation of uplink resources for a first sTTI and an indication of the DMRS configuration for the first sTTT.

At block 740, the UE 115-b may generate the DMRS and/or data transmissions for the sTTI. The data transmissions and/or DMRS may be generated based on the allocated resources from an uplink grant provided in the DCI 730, for example. In some cases, the UE 115-a may apply a cyclic shift to the DMRS transmissions in order to multiplex the DMRS transmission with a second DMRS transmission of a second UE.

UE 115-b may then transmit uplink transmission(s) 745 to the base station 105-b, which may perform received signal processing at block 750. Such processing may include demodulating the uplink transmissions 745 using a transmitted DMRS from a sTTI or from one or more previously received sTTIs. In some case, such processing may include acknowledgment feedback processing (e.g., HARQ feedback). In some examples, the DMRS pattern of the uplink transmissions 745 may include an initial DMRS symbol followed by two data symbols, and the base station 105-b may modify a processing timeline for processing the two data symbols (e.g., from a *n*+*4* timeline to a *n*+*5* timeline) to provide acknowledgment feedback.

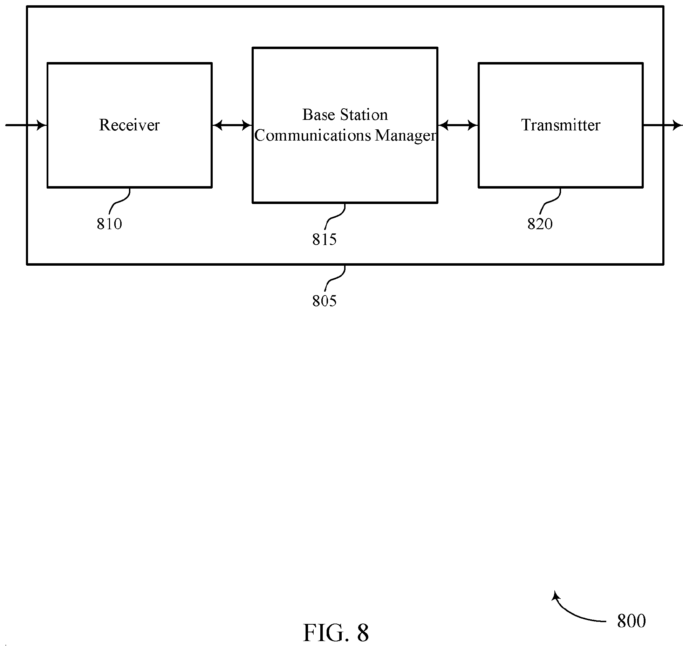

**FIG. 8** shows a block diagram 800 of a wireless device 805 that supports dynamic reference signal configuration for shortened transmission time interval wireless communications in accordance with various aspects of the present disclosure. Wireless device 805 may be an example of aspects of a base station 105 as described with reference to FIG. 1. Wireless device 805 may include receiver 810, base station communications manager 815, and transmitter 820. Wireless device 805 may also include a processor. Each of these components may be in communication with one another (e.g., via one or more buses).

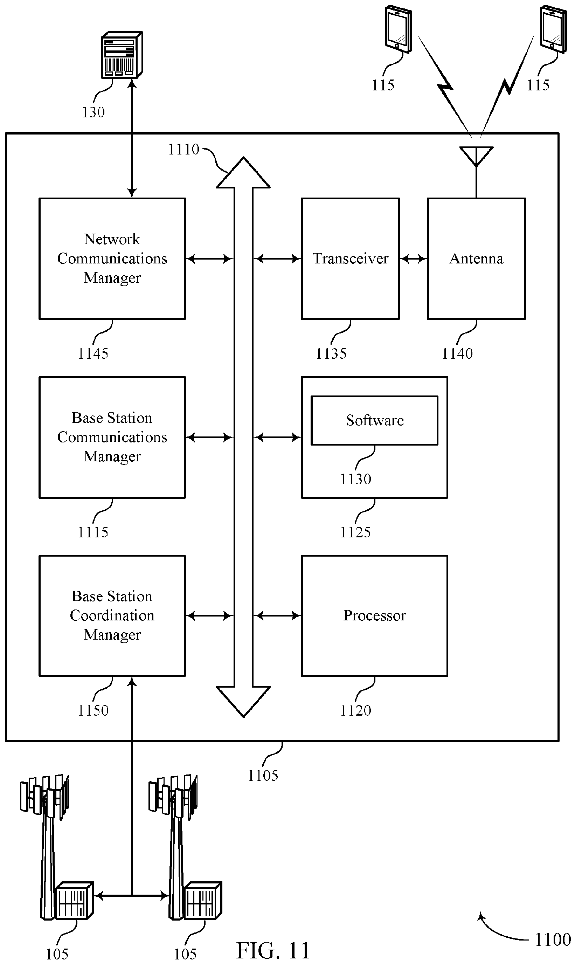

Receiver 810 may receive information such as packets, user data, or control information associated with various information channels (e.g., control channels, data channels, and information related to dynamic reference signal configuration for shortened transmission time interval wireless communications, etc.). Information may be passed on to other components of the device. The receiver 810 may be an example of aspects of the transceiver 1135 described with reference to FIG. 11.

Base station communications manager 815 may be an example of aspects of the base station communications manager 1115 described with reference to FIG. 11. Base station communications manager 815 may allocate uplink resources for a first UE in a first TTI, the first TTI including two or more OFDM symbols within a slot of a radio subframe, identify a DMRS configuration for the first TTI from a plurality of DMRS configurations, wherein the identified DMRS configuration comprises an OFDM symbol location within the first TTI that is to be used by the first UE for a DMRS transmission, and transmit an uplink grant for an uplink transmission to the first UE, the uplink grant including an indication of the allocated uplink resources for the first TTI and the DMRS configuration.

Transmitter 820 may transmit signals generated by other components of the device. In some examples, the transmitter 820 may be collocated with a receiver 810 in a transceiver module. For example, the transmitter 820 may be an example of aspects of the transceiver 1135 described with reference to FIG. 11. The transmitter 820 may include a single antenna, or it may include a set of antennas.

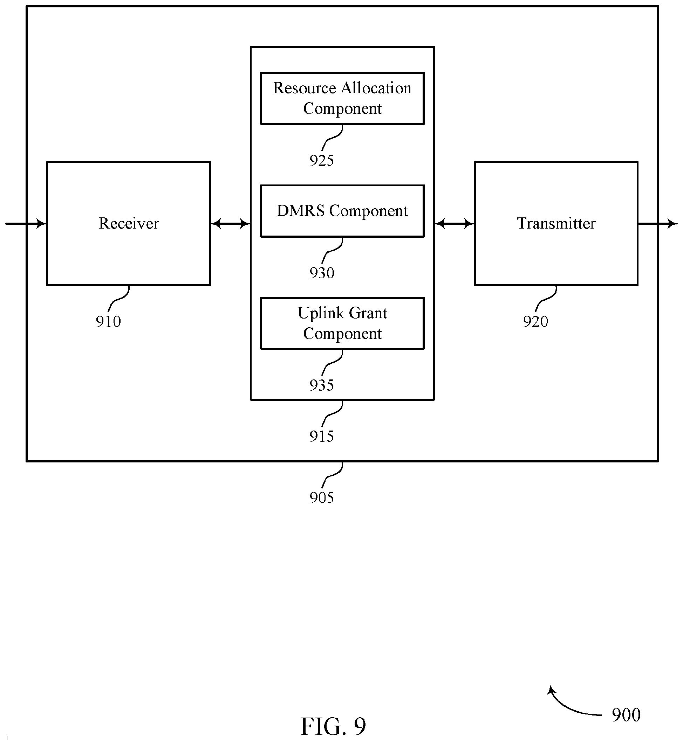

**FIG. 9** shows a block diagram 900 of a wireless device 905 that supports dynamic reference signal configuration for shortened transmission time interval wireless communications in accordance with various aspects of the present disclosure. Wireless device 905 may be an example of aspects of a wireless device 805 or a base station 105 as described with reference to FIGs. 1 and 8. Wireless device 905 may include receiver 910, base station communications manager 915, and transmitter 920. Wireless device 905 may also include a processor. Each of these components may be in communication with one another (e.g., via one or more buses).

Receiver 910 may receive information such as packets, user data, or control information associated with various information channels (e.g., control channels, data channels, and information related to dynamic reference signal configuration for shortened transmission time interval wireless communications, etc.). Information may be passed on to other components of the device. The receiver 910 may be an example of aspects of the transceiver 1135 described with reference to FIG. 11.

Base station communications manager 915 may be an example of aspects of the base station communications manager 1115 described with reference to FIG. 11. Base station communications manager 915 may also include resource allocation component 925, DMRS component 930, and uplink grant component 935.

Resource allocation component 925 may allocate uplink resources for a first UE in a first TTI, the first TTI including two or more OFDM symbols within a slot of a radio subframe.

DMRS component 930 may identify a DMRS configuration for the first TTI from a set of DMRS configurations, where the identified DMRS configuration includes an OFDM symbol location within the first TTI that is to be used by the first UE for a DMRS transmission. In some examples, DMRS component 930 may identify a second UE that is to be configured for a DMRS transmission in the first TTI. In some cases, the DMRS configuration for the first TTI provides a DMRS transmission for an uplink transmission by the first UE in a second TTI. In some cases, the first TTI is located within a first radio subframe and the second TTI is located within a second radio subframe.

Uplink grant component 935 may transmit an uplink grant for an uplink transmission to the first UE, the uplink grant including an indication of the allocated uplink resources for the first TTI and the DMRS configuration. In some cases, uplink grant component 935 may transmit the DMRS configuration and cyclic shift to be applied to the DMRS transmission to a second UE. In some cases, uplink grant component 935 may transmit a second uplink grant to the first UE that includes an indication of allocated uplink resources for the second TTI to be used for a second uplink transmission during the second TTI, and where a DMRS of the first TTI may be used for demodulation of the second TTI. In some cases, the uplink grant may further include an indication of a cyclic shift to be used by the first UE to transmit the DMRS

Transmitter 920 may transmit signals generated by other components of the device. In some examples, the transmitter 920 may be collocated with a receiver 910 in a transceiver module. For example, the transmitter 920 may be an example of aspects of the transceiver 1135 described with reference to FIG. 11. The transmitter 920 may include a single antenna, or it may include a set of antennas.

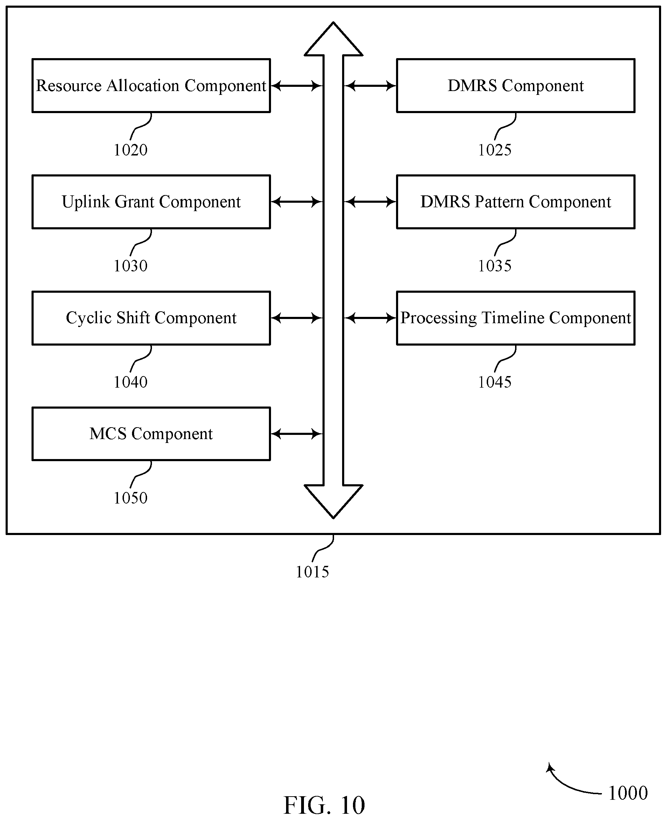

**FIG. 10** shows a block diagram 1000 of a base station communications manager 1015 that supports dynamic reference signal configuration for shortened transmission time interval wireless communications in accordance with various aspects of the present disclosure. The base station communications manager 1015 may be an example of aspects of a base station communications manager 815, a base station communications manager 915, or a base station communications manager 1115 described with reference to FIGs. 8, 9, and 11. The base station communications manager 1015 may include resource allocation component 1020, DMRS component 1025, uplink grant component 1030, DMRS pattern component 1035, cyclic shift component 1040, processing timeline component 1045, and MCS component 1050. Each of these modules may communicate, directly or indirectly, with one another (e.g., via one or more buses).

Resource allocation component 1020 may allocate uplink resources for a first UE in a first TTI, the first TTI including two or more OFDM symbols within a slot of a radio subframe.

DMRS component 1025 may identify a DMRS configuration for the first TTI from a set of DMRS configurations, where the identified DMRS configuration includes an OFDM symbol location within the first TTI that is to be used by the first UE for a DMRS transmission. In some examples, DMRS component 1025 may identify a second UE that is to be configured for a DMRS transmission in the first TTI. In some cases, the DMRS configuration for the first TTI provides a DMRS transmission for an uplink transmission by the first UE in a second TTI. In some cases, the first TTI is located within a first radio subframe and the second TTI is located within a second radio subframe.

Uplink grant component 1030 may transmit an uplink grant for an uplink transmission to the first UE, the uplink grant including an indication of the allocated uplink resources for the first TTI and the DMRS configuration. In some cases, uplink grant component 935 may transmit the DMRS configuration and cyclic shift to be applied to the DMRS transmission to a second UE. In some cases, uplink grant component 1030 may transmit a second uplink grant to the first UE that includes an indication of allocated uplink resources for the second TTI to be used for a second uplink transmission during the second TTI, and where a DMRS of the first TTI may be used for demodulation of the second TTI. In some cases, the uplink grant may further include an indication of a cyclic shift to be used by the first UE to transmit the DMRS.

DMRS pattern component 1035 may identify a first pattern of DMRS, data, or null symbols for a first TTI and a second pattern of DMRS, data, or null symbols for a second TTI, and where the first pattern and the second pattern are identified based on data to be transmitted in the first TTI or the second TTI, a location within a radio subframe of the first TTI or the second TTI, or any combination thereof. In some cases, the DMRS configuration indicates an OFDM symbol location within the first TTI that is to be used for a DMRS transmission. In some cases, the first TTI includes two OFDM symbols or three OFDM symbols, and where the DMRS configuration indicates a pattern of a DMRS symbol, one or more data symbols, or one or more null symbols for the first TTI. In some cases, the DMRS configuration may indicate a first pattern of DMRS, data, or null symbols for the first TTI. In some cases, the DMRS configuration may indicate a DMRS symbol and one or more null symbols to trigger a DMRS transmission from the first UE in the first TTI. In some cases, the identifying the DMRS configuration for the first TTI is further based on a position of the first TTI within a radio subframe, whether an SRS is to be transmitted during the first TTI, or any combination thereof.

Cyclic shift component 1040 may identify, for each of the first UE and the second UE, different cyclic shifts that are to be applied to their respective DMRS transmission.

Processing timeline component 1045 may, in some cases, modify a processing timeline for processing the two data symbols for the first TTI in cases where an initial DMRS symbol is followed by two data symbols for the first TTI. MCS component 1050 may select a MCS for the first TTI and the second TTI based on the DMRS configuration of the first TTI.

**FIG. 11** shows a diagram of a system 1100 including a device 1105 that supports dynamic reference signal configuration for shortened transmission time interval wireless communications in accordance with various aspects of the present disclosure. Device 1105 may be an example of or include the components of wireless device 805, wireless device 905, or a base station 105 as described above, e.g., with reference to FIGs. 1, 8 and 9. Device 1105 may include components for bi-directional voice and data communications including components for transmitting and receiving communications, including base station communications manager 1115, processor 1120, memory 1125, software 1130, transceiver 1135, antenna 1140, network communications manager 1145, and base station coordination manager 1150. These components may be in electronic communication via one or more busses (e.g., bus 1110). Device 1105 may communicate wirelessly with one or more UEs 115.

Base station communications manager 1115 may be an example of aspects of a base station communications manager 815, a base station communications manager 915, or a base station communications manager 1015 described with reference to FIGs. 8, 9, and 10.

Processor 1120 may include an intelligent hardware device, (e.g., a general-purpose processor, a digital signal processor (DSP), a central processing unit (CPU), a microcontroller, an application-specific integrated circuit (ASIC), an field-programmable gate array (FPGA), a programmable logic device, a discrete gate or transistor logic component, a discrete hardware component, or any combination thereof). In some cases, processor 1120 may be configured to operate a memory array using a memory controller. In other cases, a memory controller may be integrated into processor 1120. Processor 1120 may be configured to execute computer-readable instructions stored in a memory to perform various functions (e.g., functions or tasks supporting dynamic reference signal configuration for shortened transmission time interval wireless communications).

Memory 1125 may include random access memory (RAM) and read only memory (ROM). The memory 1125 may store computer-readable, computer-executable software 1130 including instructions that, when executed, cause the processor to perform various functions described herein. In some cases, the memory 1125 may contain, among other things, a basic input/output system (BIOS) which may control basic hardware and/or software operation such as the interaction with peripheral components or devices.

Software 1130 may include code to implement aspects of the present disclosure, including code to support dynamic reference signal configuration for shortened transmission time interval wireless communications. Software 1130 may be stored in a non-transitory computer-readable medium such as system memory or other memory. In some cases, the software 1130 may not be directly executable by the processor but may cause a computer (e.g., when compiled and executed) to perform functions described herein.

Transceiver 1135 may communicate bi-directionally, via one or more antennas, wired, or wireless links as described above. For example, the transceiver 1135 may represent a wireless transceiver and may communicate bi-directionally with another wireless transceiver. The transceiver 1135 may also include a modem to modulate the packets and provide the modulated packets to the antennas for transmission, and to demodulate packets received from the antennas.

In some cases, the wireless device may include a single antenna 1140. However, in some cases the device may have more than one antenna 1140, which may be capable of concurrently transmitting or receiving multiple wireless transmissions.

Network communications manager 1145 may manage communications with the core network (e.g., via one or more wired backhaul links). For example, the network communications manager 1145 may manage the transfer of data communications for client devices, such as one or more UEs 115.

Base station coordination manager 1150 may manage communications with other base station 105, and may include a controller or scheduler for controlling communications with UEs 115 in cooperation with other base stations 105. For example, the base station coordination manager 1150 may coordinate scheduling for transmissions to UEs 115 for various interference mitigation techniques such as beamforming or joint transmission. In some examples, base station coordination manager 1150 may provide an X2 interface within a wireless communication network technology to provide communication between base stations 105.

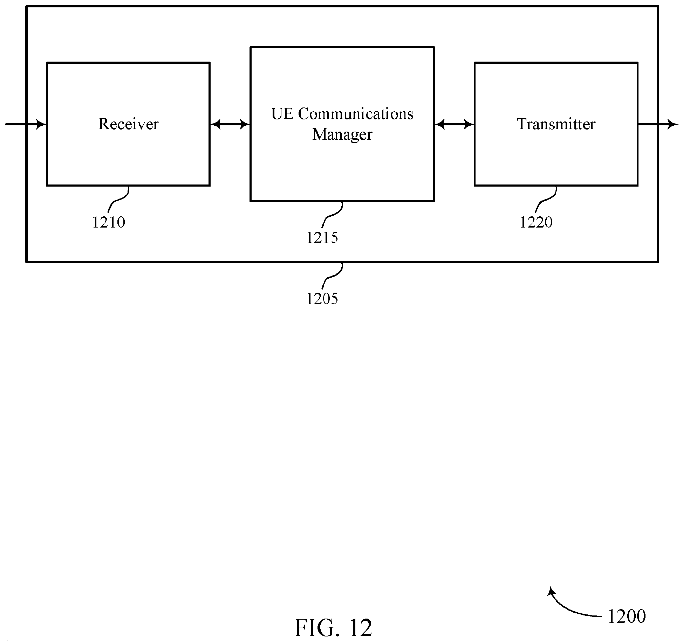

**FIG. 12** shows a block diagram 1200 of a wireless device 1205 that supports dynamic reference signal configuration for shortened transmission time interval wireless communications in accordance with various aspects of the present disclosure. Wireless device 1205 may be an example of aspects of a UE 115 as described with reference to FIG. 1. Wireless device 1205 may include receiver 1210, UE communications manager 1215, and transmitter 1220. Wireless device 1205 may also include a processor. Each of these components may be in communication with one another (e.g., via one or more buses).

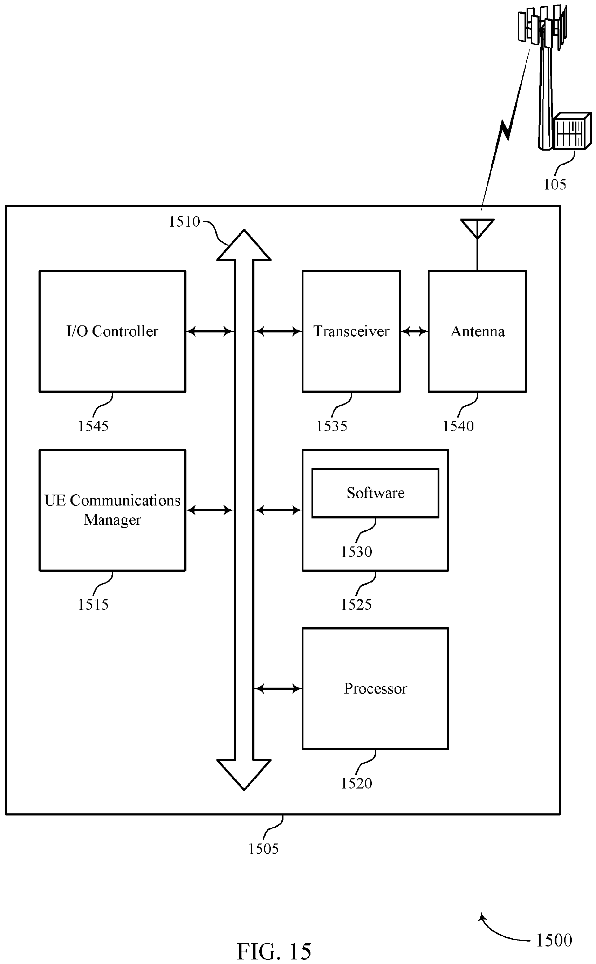

Receiver 1210 may receive information such as packets, user data, or control information associated with various information channels (e.g., control channels, data channels, and information related to dynamic reference signal configuration for shortened transmission time interval wireless communications, etc.). Information may be passed on to other components of the device. The receiver 1210 may be an example of aspects of the transceiver 1535 described with reference to FIG. 15.

UE communications manager 1215 may be an example of aspects of the UE communications manager 1515 described with reference to FIG. 15.

UE communications manager 1215 may receive an allocation of uplink resources from a base station for a first TTI, the first TTI including two or more OFDM symbols within a slot of a radio subframe and identify a DMRS configuration for the first TTI.

Transmitter 1220 may transmit signals generated by other components of the device. In some examples, the transmitter 1220 may be collocated with a receiver 1210 in a transceiver module. For example, the transmitter 1220 may be an example of aspects of the transceiver 1535 described with reference to FIG. 15. The transmitter 1220 may include a single antenna, or it may include a set of antennas. Transmitter 1220 also may transmit a DMRS to the base station using the allocated uplink resources based on the DMRS configuration.

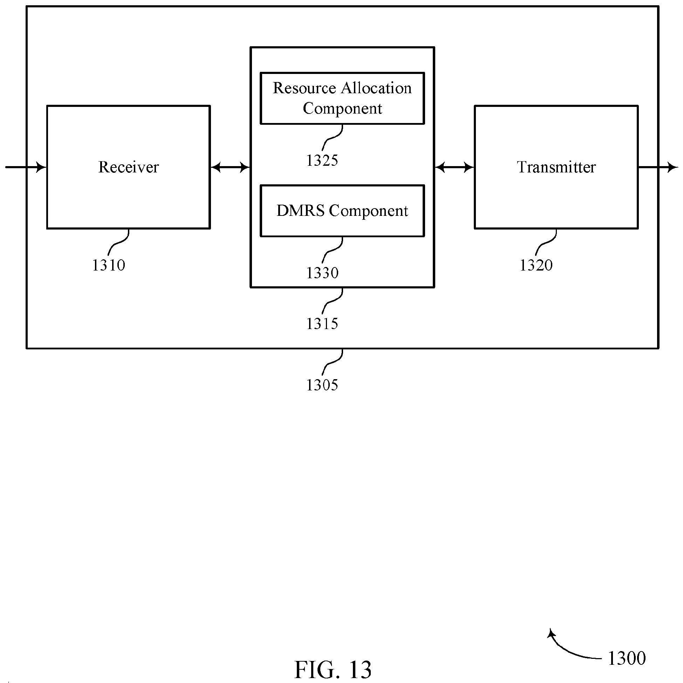

**FIG. 13** shows a block diagram 1300 of a wireless device 1305 that supports dynamic reference signal configuration for shortened transmission time interval wireless communications in accordance with various aspects of the present disclosure. Wireless device 1305 may be an example of aspects of a wireless device 1205 or a UE 115 as described with reference to FIGs. 1 and 12. Wireless device 1305 may include receiver 1310, UE communications manager 1315, and transmitter 1320. Wireless device 1305 may also include a processor. Each of these components may be in communication with one another (e.g., via one or more buses).

Receiver 1310 may receive information such as packets, user data, or control information associated with various information channels (e.g., control channels, data channels, and information related to dynamic reference signal configuration for shortened transmission time interval wireless communications, etc.). Information may be passed on to other components of the device. The receiver 1310 may be an example of aspects of the transceiver 1535 described with reference to FIG. 15.

UE communications manager 1315 may be an example of aspects of the UE communications manager 1515 described with reference to FIG. 15. UE communications manager 1315 may also include resource allocation component 1325 and DMRS component 1330.

Resource allocation component 1325 may receive an allocation of uplink resources from a base station for a first TTI, the first TTI including two or more OFDM symbols within a slot of a radio subframe, receive a second allocation of uplink resources from the base station for a second TTI, the DMRS transmission during the first TTI to be used for demodulation of an uplink data transmission of the second TTI. In some cases, the resource allocation component 1325 may reinterpret one or more bit fields associated with the one or more null symbols within the allocation of uplink resources.

DMRS component 1330 may identify a DMRS configuration for the first TTI. In some cases, the first TTI is located within a first radio subframe and the DMRS component 1330 may identify a DMRS configuration for a second TTI located within a second radio subframe, where a DMRS from the first TTI is to be used for demodulation of a data transmission of the second TTI.

Transmitter 1320 may transmit signals generated by other components of the device. In some examples, the transmitter 1320 may be collocated with a receiver 1310 in a transceiver module. For example, the transmitter 1320 may be an example of aspects of the transceiver 1535 described with reference to FIG. 15. The transmitter 1320 may include a single antenna, or it may include a set of antennas.

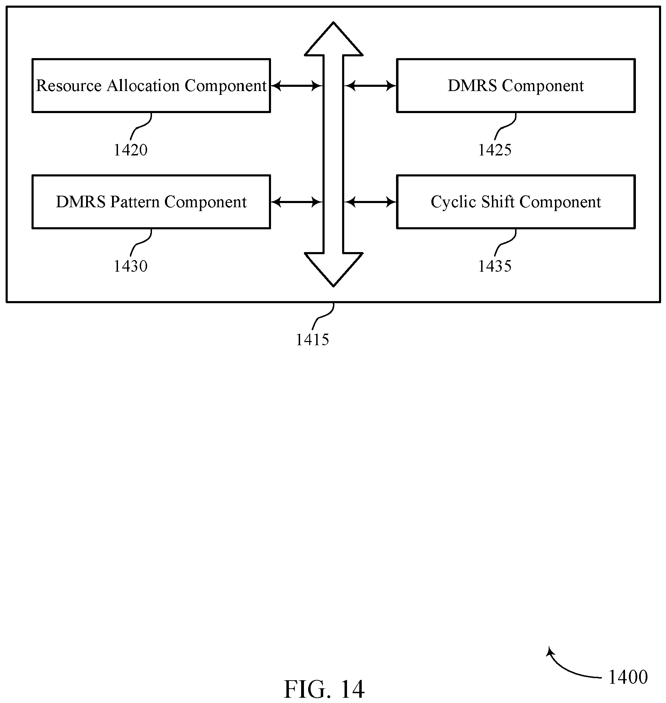

**FIG. 14** shows a block diagram 1400 of a UE communications manager 1415 that supports dynamic reference signal configuration for shortened transmission time interval wireless communications in accordance with various aspects of the present disclosure. The UE communications manager 1415 may be an example of aspects of a UE communications manager 1215, a UE communications manager 1315, or a UE communications manager 1515 described with reference to FIGs. 12, 13, and 15. The UE communications manager 1415 may include resource allocation component 1420, DMRS component 1425, DMRS pattern component 1430, and cyclic shift component 1435. Each of these modules may communicate, directly or indirectly, with one another (e.g., via one or more buses).

Resource allocation component 1420 may receive an allocation of uplink resources from a base station for a first TTI, the first TTI including two or more OFDM symbols within a slot of a radio subframe. In some cases, resource allocation component 1420 may receive a second allocation of uplink resources from the base station for a second TTI, the DMRS transmission during the first TTI to be used for demodulation of an uplink data transmission of the second TTI. In some cases, resource allocation component 1420 may reinterpret one or more bit fields associated with the one or more null symbols within the allocation of uplink resources.

DMRS component 1425 may identify a DMRS configuration for the first TTI and/or one or more other TTIs. In some cases, the first TTI is located within a first radio subframe and the DMRS component 1425 may identify DMRS configuration for a second TTI located within a second radio subframe.

DMRS pattern component 1430 may determine a DMRS pattern for one or more TTIs. In some cases, the DMRS configuration indicates an OFDM symbol location within the first TTI that is to be used for transmitting the DMRS. In some cases, the first TTI includes two OFDM symbols or three OFDM symbols, and where the DMRS configuration indicates a pattern of a DMRS symbol, one or more data symbols, or one or more null symbols for the first TTI. In some cases, the allocation of uplink resources indicates one or more null symbols and a DMRS symbol within the first TTI, which may trigger a DMRS transmission that may be used in a second TTI subsequent to the first TTI.

Cyclic shift component 1435 may identify, based on the allocation of uplink resources, a cyclic shift that is to be applied to the DMRS transmission.

**FIG. 15** shows a diagram of a system 1500 including a device 1505 that supports dynamic reference signal configuration for shortened transmission time interval wireless communications in accordance with various aspects of the present disclosure. Device 1505 may be an example of or include the components of UE 115 as described above, e.g., with reference to FIG. 1. Device 1505 may include components for bi-directional voice and data communications including components for transmitting and receiving communications, including UE communications manager 1515, processor 1520, memory 1525, software 1530, transceiver 1535, antenna 1540, and I/O controller 1545. These components may be in electronic communication via one or more busses (e.g., bus 1510). Device 1505 may communicate wirelessly with one or more base stations 105.

UE communications manager 1515 may be an example of aspects of a UE communications manager 1215, a UE communications manager 1315, or a UE communications manager 1415 described with reference to FIGs. 12, 13, and 14.

Processor 1520 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, processor 1520 may be configured to operate a memory array using a memory controller. In other cases, a memory controller may be integrated into processor 1520. Processor 1520 may be configured to execute computer-readable instructions stored in a memory to perform various functions (e.g., functions or tasks supporting dynamic reference signal configuration for shortened transmission time interval wireless communications).

Memory 1525 may include RAM and ROM. The memory 1525 may store computer-readable, computer-executable software 1530 including instructions that, when executed, cause the processor to perform various functions described herein. In some cases, the memory 1525 may contain, among other things, a BIOS which may control basic hardware and/or software operation such as the interaction with peripheral components or devices.

Software 1530 may include code to implement aspects of the present disclosure, including code to support dynamic reference signal configuration for shortened transmission time interval wireless communications. Software 1530 may be stored in a non-transitory computer-readable medium such as system memory or other memory. In some cases, the software 1530 may not be directly executable by the processor but may cause a computer (e.g., when compiled and executed) to perform functions described herein.

Transceiver 1535 may communicate bi-directionally, via one or more antennas, wired, or wireless links as described above. For example, the transceiver 1535 may represent a wireless transceiver and may communicate bi-directionally with another wireless transceiver. The transceiver 1535 may also include a modem to modulate the packets and provide the modulated packets to the antennas for transmission, and to demodulate packets received from the antennas.

In some cases, the wireless device may include a single antenna 1540. However, in some cases the device may have more than one antenna 1540, which may be capable of concurrently transmitting or receiving multiple wireless transmissions.

I/O controller 1545 may manage input and output signals for device 1505. I/O controller 1545 may also manage peripherals not integrated into device 1505. In some cases, I/O controller 1545 may represent a physical connection or port to an external peripheral. In some cases, I/O controller 1545 may utilize an operating system such as iOS^{®}, ANDROID^{®}, MS-DOS^{®}, MS-WINDOWS^{®}, OS/2^{®}, UNIX^{®}, LINUX^{®}, or another known operating system.

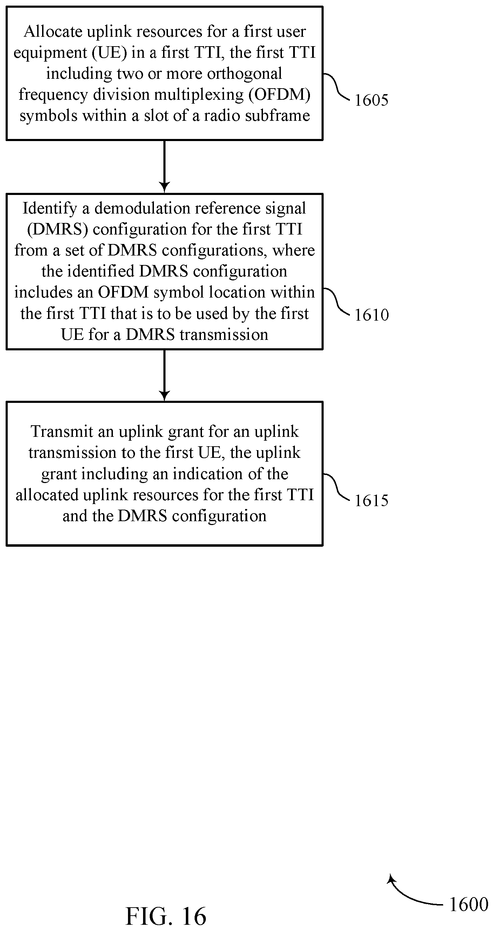

**FIG. 16** shows a flowchart illustrating a method 1600 for dynamic reference signal configuration for shortened transmission time interval wireless communications in accordance with various aspects of the present disclosure. The operations of method 1600 may be implemented by a base station 105 or its components as described herein. For example, the operations of method 1600 may be performed by a base station communications manager as described with reference to FIGs. 8 through 11. In some examples, a base station 105 may execute a set of codes to control the functional elements of the device to perform the functions described below. Additionally or alternatively, the base station 105 may perform aspects the functions described below using special-purpose hardware.

At block 1605 the base station 105 may allocate uplink resources for a first UE in a first TTI, the first TTI including two or more OFDM symbols within a slot of a radio subframe. The operations of block 1605 may be performed according to the methods described with reference to FIGs. 1 through 7. In certain examples, aspects of the operations of block 1605 may be performed by a resource allocation component as described with reference to FIGs. 8 through 11.

At block 1610 the base station 105 may identify a DMRS configuration for the first TTI from a set of DMRS configurations, where the identified DMRS configuration includes an OFDM symbol location within the first TTI that is to be used by the first UE for a DMRS transmission. The operations of block 1610 may be performed according to the methods described with reference to FIGs. 1 through 7. In certain examples, aspects of the operations of block 1610 may be performed by a DMRS component as described with reference to FIGs. 8 through 11.

At block 1615 the base station 105 may transmit an uplink grant for an uplink transmission to the first UE, the uplink grant including an indication of the allocated uplink resources for the first TTI and the DMRS configuration. The operations of block 1615 may be performed according to the methods described with reference to FIGs. 1 through 7. In certain examples, aspects of the operations of block 1615 may be performed by a uplink grant component as described with reference to FIGs. 8 through 11.

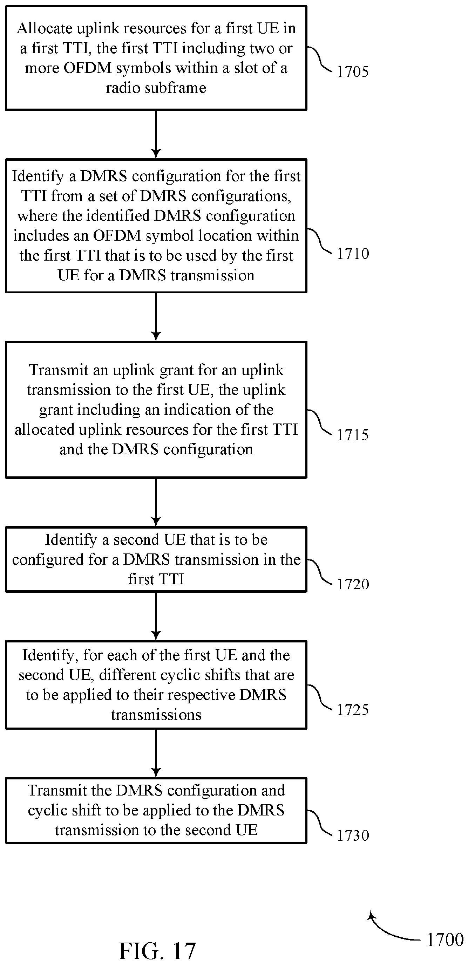

**FIG. 17** shows a flowchart illustrating a method 1700 for dynamic reference signal configuration for shortened transmission time interval wireless communications in accordance with various aspects of the present disclosure. The operations of method 1700 may be implemented by a base station 105 or its components as described herein. For example, the operations of method 1700 may be performed by a base station communications manager as described with reference to FIGs. 8 through 11. In some examples, a base station 105 may execute a set of codes to control the functional elements of the device to perform the functions described below. Additionally or alternatively, the base station 105 may perform aspects the functions described below using special-purpose hardware.

At block 1705 the base station 105 may allocate uplink resources for a first UE in a first TTI, the first TTI including two or more OFDM symbols within a slot of a radio subframe. The operations of block 1705 may be performed according to the methods described with reference to FIGs. 1 through 7. In certain examples, aspects of the operations of block 1705 may be performed by a resource allocation component as described with reference to FIGs. 8 through 11.

At block 1710 the base station 105 may identify a DMRS configuration for the first TTI from a set of DMRS configurations, where the identified DMRS configuration includes an OFDM symbol location within the first TTI that is to be used by the first UE for a DMRS transmission. The operations of block 1710 may be performed according to the methods described with reference to FIGs. 1 through 7. In certain examples, aspects of the operations of block 1710 may be performed by a DMRS component as described with reference to FIGs. 8 through 11.

At block 1715 the base station 105 may transmit an uplink grant for an uplink transmission to the first UE, the uplink grant including an indication of the allocated uplink resources for the first TTI and the DMRS configuration. The operations of block 1715 may be performed according to the methods described with reference to FIGs. 1 through 7. In certain examples, aspects of the operations of block 1715 may be performed by a uplink grant component as described with reference to FIGs. 8 through 11.

At block 1720 the base station 105 may identify a second UE that is to be configured for a DMRS transmission in the first TTI. The operations of block 1720 may be performed according to the methods described with reference to FIGs. 1 through 7. In certain examples, aspects of the operations of block 1720 may be performed by a DMRS component as described with reference to FIGs. 8 through 11.

At block 1725 the base station 105 may identify, for each of the first UE and the second UE, different cyclic shifts that are to be applied to their respective DMRS transmission. The operations of block 1725 may be performed according to the methods described with reference to FIGs. 1 through 7. In certain examples, aspects of the operations of block 1725 may be performed by a cyclic shift component as described with reference to FIGs. 8 through 11.

At block 1730 the base station 105 may transmit the DMRS configuration and cyclic shift to be applied to the DMRS transmission to the second UE. The operations of block 1730 may be performed according to the methods described with reference to FIGs. 1 through 7. In certain examples, aspects of the operations of block 1730 may be performed by a uplink grant component as described with reference to FIGs. 8 through 11.

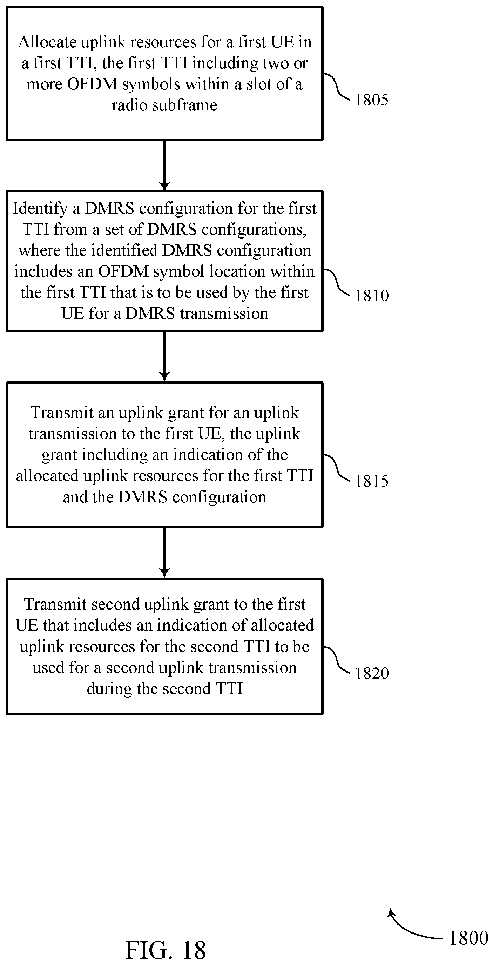

**FIG. 18** shows a flowchart illustrating a method 1800 for dynamic reference signal configuration for shortened transmission time interval wireless communications in accordance with various aspects of the present disclosure. The operations of method 1800 may be implemented by a base station 105 or its components as described herein. For example, the operations of method 1800 may be performed by a base station communications manager as described with reference to FIGs. 8 through 11. In some examples, a base station 105 may execute a set of codes to control the functional elements of the device to perform the functions described below. Additionally or alternatively, the base station 105 may perform aspects the functions described below using special-purpose hardware.

At block 1805 the base station 105 may allocate uplink resources for a first UE in a first TTI, the first TTI including two or more OFDM symbols within a slot of a radio subframe. The operations of block 1805 may be performed according to the methods described with reference to FIGs. 1 through 7. In certain examples, aspects of the operations of block 1805 may be performed by a resource allocation component as described with reference to FIGs. 8 through 11.

At block 1810 the base station 105 may identify a DMRS configuration for the first TTI from a set of DMRS configurations, where the identified DMRS configuration includes an OFDM symbol location within the first TTI that is to be used by the first UE for a DMRS transmission. The operations of block 1810 may be performed according to the methods described with reference to FIGs. 1 through 7. In certain examples, aspects of the operations of block 1810 may be performed by a DMRS component as described with reference to FIGs. 8 through 11.

At block 1815 the base station 105 may transmit an uplink grant for an uplink transmission to the first UE, the uplink grant including an indication of the allocated uplink resources for the first TTI and the DMRS configuration. The operations of block 1815 may be performed according to the methods described with reference to FIGs. 1 through 7. In certain examples, aspects of the operations of block 1815 may be performed by a uplink grant component as described with reference to FIGs. 8 through 11.

At block 1820 the base station 105 may transmit a second uplink grant to the first UE that includes an indication of allocated uplink resources for the second TTI to be used for a second uplink transmission during the second TTI. The operations of block 1820 may be performed according to the methods described with reference to FIGs. 1 through 7. In certain examples, aspects of the operations of block 1820 may be performed by a uplink grant component as described with reference to FIGs. 8 through 11. In some cases, the first TTI includes two OFDM symbols or three OFDM symbols, and the DMRS configuration indicates a pattern of a DMRS symbol, one or more data symbols, or one or more null symbols for the first TTI, and a DMRS configuration identifying a first pattern of DMRS, data, or null symbols for the first TTI may indicate the DMRS symbol and one or more null symbols are to trigger a DMRS transmission from the first UE in the first TTI that is to be used to demodulate the second uplink transmission.

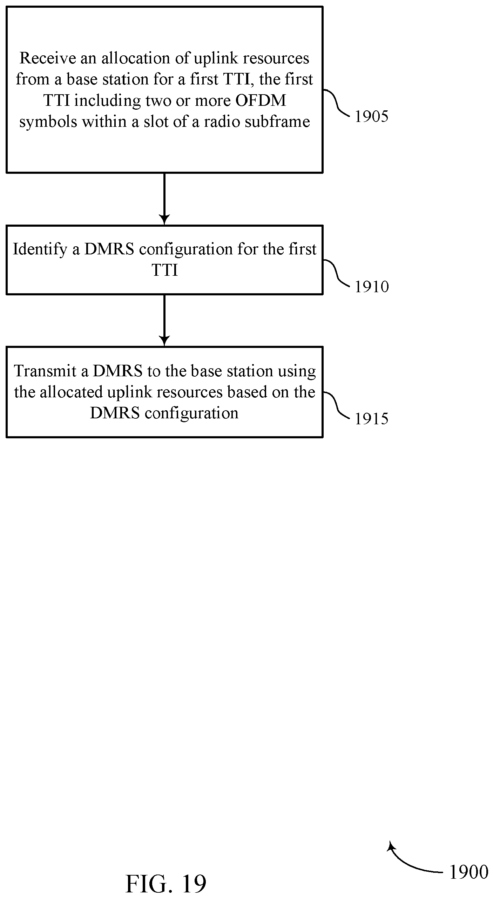

**FIG. 19** shows a flowchart illustrating a method 1900 for dynamic reference signal configuration for shortened transmission time interval wireless communications in accordance with various aspects of the present disclosure. The operations of method 1900 may be implemented by a UE 115 or its components as described herein. For example, the operations of method 1900 may be performed by a UE communications manager as described with reference to FIGs. 12 through 15. In some examples, a UE 115 may execute a set of codes to control the functional elements of the device to perform the functions described below. Additionally or alternatively, the UE 115 may perform aspects the functions described below using special-purpose hardware.

At block 1905 the UE 115 may receive an allocation of uplink resources from a base station for a first TTI, the first TTI including two or more OFDM symbols within a slot of a radio subframe. The operations of block 1905 may be performed according to the methods described with reference to FIGs. 1 through 7. In certain examples, aspects of the operations of block 1905 may be performed by a resource allocation component as described with reference to FIGs. 12 through 15.

At block 1910 the UE 115 may identify a DMRS configuration for the first TTI. The operations of block 1910 may be performed according to the methods described with reference to FIGs. 1 through 7. In certain examples, aspects of the operations of block 1910 may be performed by a DMRS component as described with reference to FIGs. 12 through 15.

At block 1915 the UE 115 may transmit a DMRS to the base station using the allocated uplink resources based at least in part on the DMRS configuration. The operations of block 1915 may be performed according to the methods described with reference to FIGs. 1 through 7. In certain examples, aspects of the operations of block 1915 may be performed by a transmitter as described with reference to FIGs. 12 through 15.

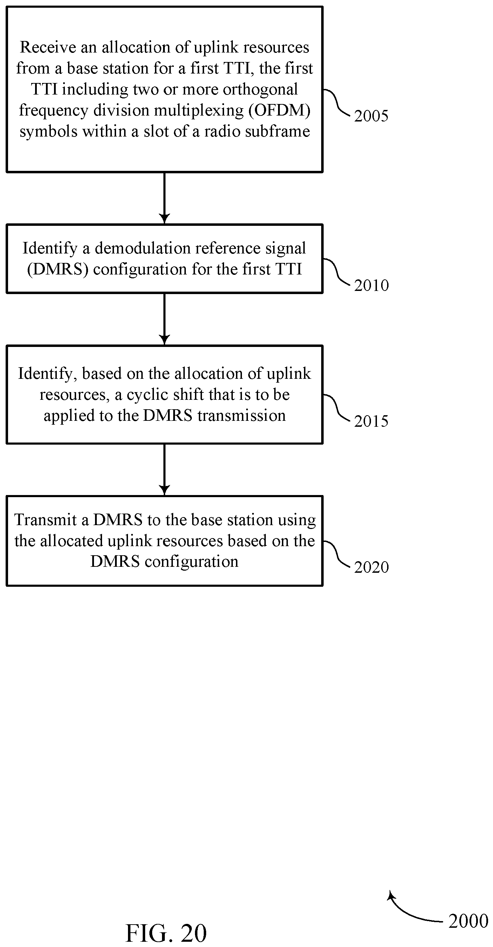

**FIG. 20** shows a flowchart illustrating a method 2000 for dynamic reference signal configuration for shortened transmission time interval wireless communications in accordance with various aspects of the present disclosure. The operations of method 2000 may be implemented by a UE 115 or its components as described herein. For example, the operations of method 2000 may be performed by a UE communications manager as described with reference to FIGs. 12 through 15. In some examples, a UE 115 may execute a set of codes to control the functional elements of the device to perform the functions described below. Additionally or alternatively, the UE 115 may perform aspects the functions described below using special-purpose hardware.

At block 2005 the UE 115 may receive an allocation of uplink resources from a base station for a first TTI, the first TTI including two or more OFDM symbols within a slot of a radio subframe. The operations of block 2005 may be performed according to the methods described with reference to FIGs. 1 through 7. In certain examples, aspects of the operations of block 2005 may be performed by a resource allocation component as described with reference to FIGs. 12 through 15.

At block 2010 the UE 115 may identify a DMRS configuration for the first TTI. The operations of block 2010 may be performed according to the methods described with reference to FIGs. 1 through 7. In certain examples, aspects of the operations of block 2010 may be performed by a DMRS component as described with reference to FIGs. 12 through 15.

At block 2015 the UE 115 may identify, based at least in part on the allocation of uplink resources, a cyclic shift that is to be applied to the DMRS transmission. The operations of block 2015 may be performed according to the methods described with reference to FIGs. 1 through 7. In certain examples, aspects of the operations of block 2015 may be performed by a cyclic shift component as described with reference to FIGs. 12 through 15.

At block 2020 the UE 115 may transmit a DMRS to the base station using the allocated uplink resources based at least in part on the DMRS configuration. The operations of block 2020 may be performed according to the methods described with reference to FIGs. 1 through 7. In certain examples, aspects of the operations of block 2020 may be performed by a transmitter as described with reference to FIGs. 12 through 15.

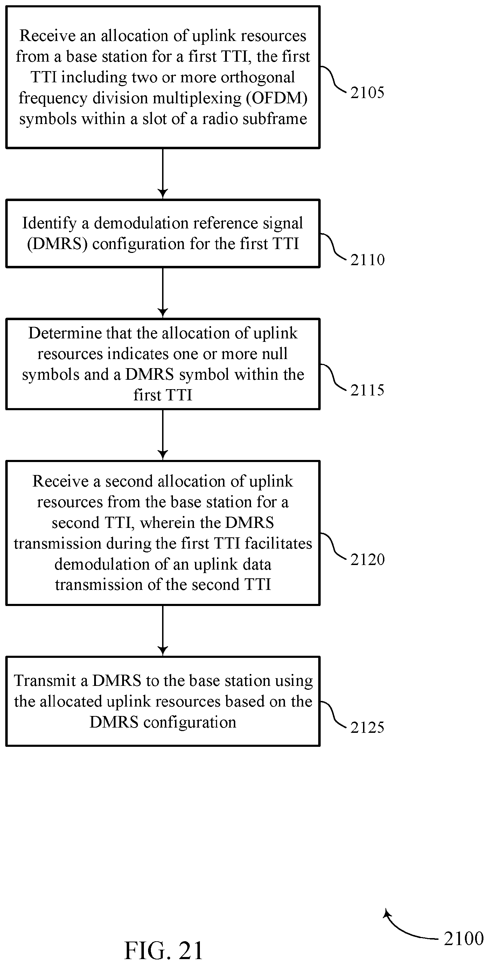

**FIG. 21** shows a flowchart illustrating a method 2100 for dynamic reference signal configuration for shortened transmission time interval wireless communications in accordance with various aspects of the present disclosure. The operations of method 2100 may be implemented by a UE 115 or its components as described herein. For example, the operations of method 2100 may be performed by a UE communications manager as described with reference to FIGs. 12 through 15. In some examples, a UE 115 may execute a set of codes to control the functional elements of the device to perform the functions described below. Additionally or alternatively, the UE 115 may perform aspects the functions described below using special-purpose hardware.

At block 2105 the UE 115 may receive an allocation of uplink resources from a base station for a first TTI, the first TTI including two or more OFDM symbols within a slot of a radio subframe. The operations of block 2105 may be performed according to the methods described with reference to FIGs. 1 through 7. In certain examples, aspects of the operations of block 2105 may be performed by a resource allocation component as described with reference to FIGs. 12 through 15.

At block 2110 the UE 115 may identify a DMRS configuration for the first TTI. The operations of block 2110 may be performed according to the methods described with reference to FIGs. 1 through 7. In certain examples, aspects of the operations of block 2110 may be performed by a DMRS component as described with reference to FIGs. 12 through 15. In some cases, the first TTI includes two OFDM symbols or three OFDM symbols, and the DMRS configuration indicates a pattern of a DMRS symbol, one or more data symbols, or one or more null symbols for the first TTI.

At block 2115 the UE 115 may determine that the allocation of uplink resources indicates one or more null symbols and a DMRS symbol within the first TTI. The operations of block 2115 may be performed according to the methods described with reference to FIGs. 1 through 7. In certain examples, aspects of the operations of block 2115 may be performed by a DMRS pattern component as described with reference to FIGs. 12 through 15.

At block 2120 the UE 115 may receive a second allocation of uplink resources from the base station for a second TTI, the DMRS transmission during the first TTI to be used for demodulation of an uplink data transmission of the second TTI. The operations of block 2120 may be performed according to the methods described with reference to FIGs. 1 through 7. In certain examples, aspects of the operations of block 2120 may be performed by a resource allocation component as described with reference to FTGs. 12 through 15.

At block 2125 the UE 115 may transmit a DMRS to the base station using the allocated uplink resources based at least in part on the DMRS configuration of the first TTI. Such a transmission may be followed by a transmission of uplink data using the uplink resources of the second TTI. The operations of block 2125 may be performed according to the methods described with reference to FIGs. 1 through 7. In certain examples, aspects of the operations of block 2125 may be performed by a transmitter as described with reference to FIGs. 12 through 15.

It should be noted that the methods described above describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" are often used interchangeably. A code division multiple access (CDMA) system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 IX, IX, etc. IS-856 (TIA-856) is commonly referred to as CDMA2000 1xEV-DO, High Rate Packet Data (HRPD), etc. UTRA includes Wideband CDMA (WCDMA) and other variants of CDMA. A time division multiple access (TDMA) system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications system (UMTS). 3GPP Long Term Evolution (LTE) and LTE-Advanced (LTE-A) are releases of Universal Mobile Telecommunications System (UMTS) that use E-UTRA. UTRA, E-UTRA, UMTS, LTE, LTE-A, NR, and Global System for Mobile communications (GSM) are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects an LTE or an NR system may be described for purposes of example, and LTE or NR terminology may be used in much of the description, the techniques described herein are applicable beyond LTE or NR applications.

In LTE/LTE-A networks, including such networks described herein, the term evolved node B (eNB) may be generally used to describe the base stations. The wireless communications system or systems described herein may include a heterogeneous LTE/LTE-A or NR network in which different types of evolved node B (eNBs) provide coverage for various geographical regions. For example, each eNB, gNB or base station may provide communication coverage for a macro cell, a small cell, or other types of cell. The term "cell" may be used to describe a base station, a carrier or component carrier associated with a base station, or a coverage area (e.g., sector, etc.) of a carrier or base station, depending on context.

Base stations may include or may be referred to by those skilled in the art as a base transceiver station, a radio base station, an access point, a radio transceiver, a NodeB, eNodeB (eNB), next generation NodeB (gNB), Home NodeB, a Home eNodeB, or some other suitable terminology. The geographic coverage area for a base station may be divided into sectors making up only a portion of the coverage area. The wireless communications system or systems described herein may include base stations of different types (e.g., macro or small cell base stations). The UEs described herein may be able to communicate with various types of base stations and network equipment including macro eNBs, small cell eNBs, gNBs, relay base stations, and the like. There may be overlapping geographic coverage areas for different technologies.

A macro cell generally covers a relatively large geographic area (e.g., several kilometers in radius) and may allow unrestricted access by UEs with service subscriptions with the network provider. A small cell is a lower-powered base station, as compared with a macro cell, that may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells (e.g., component carriers).

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The downlink transmissions described herein may also be called forward link transmissions while the uplink transmissions may also be called reverse link transmissions. Each communication link described herein-including, for example, wireless communications system 100 and 200 of FIGs. 1 and 2-may include one or more carriers, where each carrier may be a signal made up of multiple sub-carriers (e.g., waveform signals of different frequencies).

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, digital subscriber line (DSL), or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the invention as defined by the appended claims.

## Claims

1. A method (1900) for wireless communication, comprising:
receiving (1905) an allocation of uplink resources from a base station for a first transmission time interval, TTI" the first TTI comprising two or more orthogonal frequency division multiplexing, OFDM, symbols within a slot of a subframe;
identifying (1910) a demodulation reference signal, DMRS, configuration for the first TTI; and
transmitting (1915) a DMRS to the base station using the allocated uplink resources based at least in part on the DMRS configuration,
**characterized in that**, the first TTI comprises two OFDM symbols or three OFDM symbols, and wherein the DMRS configuration indicates a pattern formed from a DMRS symbol and one or more data symbols for the first TTI.

2. The method of claim 1, wherein the DMRS configuration indicates an OFDM symbol location within the first TTI that is to be used for transmitting the DMRS.

3. The method of claim 1, further comprising:
identifying, based at least in part on the allocation of uplink resources, a cyclic shift that is to be applied to the DMRS.

4. The method of claim 1, further comprising:
in the case when the first TTI comprises three OFDM symbols, determining that the allocation of uplink resources includes one null symbol and a DMRS symbol within the first TTI.

5. The method of claim 1, wherein the first TTI comprises the DMRS symbol and the one or more data symbols.

6. An apparatus (1305) for wireless communication, comprising respective means to perform the respective steps of claims 1-5.

7. A method (1600) for wireless communication, comprising:
allocating (1605) uplink resources for a first user equipment, UE, in a first transmission time interval, TTI" the first TTI comprising two or more orthogonal frequency division multiplexing, OFDM, symbols within a slot of a subframe;
identifying (1610) a demodulation reference signal, DMRS, configuration for the first TTI from a plurality of DMRS configurations, wherein the identified DMRS configuration comprises an OFDM symbol location within the first TTI that is to be used by the first UE for a DMRS transmission; and
transmitting (1615) an uplink grant for an uplink transmission to the first UE, the uplink grant including an indication of the allocated uplink resources for the first TTI and the DMRS configuration,
**characterized in that**, the first TTI comprises two OFDM symbols or three OFDM symbols, and wherein the DMRS configuration indicates a pattern formed from a DMRS symbol and one or more data symbols for the first TTI.

8. The method of claim 7, wherein the uplink grant further comprises an indication of a cyclic shift to be used by the first UE to transmit the DMRS.

9. The method of claim 7, further comprising:
identifying a second UE that is to be configured for a DMRS transmission in the first TTI;
identifying, for each of the first UE and the second UE, different cyclic shifts that are to be applied to their respective DMRS transmissions; and
transmitting the DMRS configuration and cyclic shift to be applied to the DMRS transmission to the second UE.

10. The method of claim 7, wherein the DMRS configuration for the first TTI provides a DMRS transmission for an uplink transmission by the first UE in a second TTI.

11. The method of claim 10, wherein the first TTI is located within a first subframe and the second TTI is located within a second subframe.

12. The method of claim 7, wherein the first TTI comprises the DMRS symbol and the one or more data symbols.

13. An apparatus (905) for wireless communication, comprisng respective means to perform the respective steps of claims 7-12.

## Patentansprüche

1. Ein Verfahren (1900) für eine drahtlose Kommunikation, aufweisend:
Empfangen (1905) einer Zuweisung von Aufwärtsstrecke-Ressourcen von einer Basisstation für ein erstes Sendezeitintervall (Transmission Time Interval bzw. TTI), wobei das erste TTI zwei oder mehr Orthogonalfrequenzmultiplex (OFDM)-Symbole in einem Schlitz eines Subrahmens aufweist,
Identifizieren (1910) einer Demodulationsreferenzsignal (DMRS)-Konfiguration für das erste TTI, und
Senden (1915) eines DMRS an die Basisstation unter Verwendung der zugewiesenen Aufwärtsstrecke-Ressourcen basierend wenigstens teilweise auf der DMRS-Konfiguration,
**dadurch gekennzeichnet, dass** das erste TTI zwei OFDM-Symbole oder drei OFDM-Symbole aufweist und die DMRS-Konfiguration ein Muster angibt, das durch ein DMRS-Symbol und einem oder mehreren Datensymbolen für das erste TTI gebildet wird.

2. Verfahren nach Anspruch 1, wobei die DMRS-Konfiguration eine OFDM-Symbolposition in dem ersten TTI, die für das Senden des DMRS zu verwenden ist, angibt.

3. Verfahren nach Anspruch 1, das weiterhin aufweist:
Identifizieren, basierend wenigstens teilweise auf der Zuweisung von Aufwärtsstrecke-Ressourcen, einer zyklischen Verschiebung, die auf das DMRS anzuwenden ist.

4. Verfahren nach Anspruch 1, das weiterhin aufweist:
wenn das erste TTI drei OFDM-Symbole aufweist, Bestimmen, dass die Zuweisung der Aufwärtsstrecke-Ressourcen ein Nullsymbol und ein DMRS-Symbol in dem ersten TTI enthält.

5. Verfahren nach Anspruch 1, wobei das erste TTI das DMRS-Symbol und das eine oder die mehreren Datensymbole.

6. Eine Vorrichtung (1305) für drahtlose Kommunikation, die entsprechende Mittel zum Durchführen der entsprechenden Schritte nach den Ansprüchen 1-5 aufweist.

7. Ein Verfahren (1600) für eine drahtlose Kommunikation, aufweisend:
Zuweisen (1605) von Aufwärtsstrecke-Ressourcen für ein erstes Benutzergerät (User Equipment bzw. UE) in einem ersten Sendezeitintervall (Transmission Time Interval bzw. TTI), wobei das erste TTI zwei oder mehr Orthogonalfrequenzmultiplex (OFDM)-Symbole in einem Schlitz eines Subrahmens aufweist,
Identifizieren (1610) einer Demodulationsreferenzsignal (DMRS)-Konfiguration für das erste TTI aus einer Vielzahl von DMRS-Konfigurationen, wobei die identifizierte DMRS-Konfiguration eine OFDM-Symbolposition in dem ersten TTI, die durch das erste UE für eine DMRS-Sendung zu verwenden ist, aufweist, und
Senden (1615) einer Aufwärtsstrecke-Gewährung für eine Aufwärtsstrecke-Sendung an das erste UE, wobei die Aufwärtsstrecke-Gewährung eine Angabe der zugewiesenen Aufwärtsstrecke-Ressourcen für das erste TTI und die DMRS-Konfiguration enthält,
**dadurch gekennzeichnet, dass** das erste TTI zwei OFDM-Symbole oder drei OFDM-Symbole aufweist und die DMRS-Konfiguration ein Muster angibt, das durch ein DMRS-Symbol und einem oder mehreren Datensymbolen für das erste TTI gebildet wird.

8. Verfahren nach Anspruch 7, wobei die Aufwärtsstrecke-Gewährung weiterhin eine Angabe einer zyklischen Verschiebung, die durch das erste UE für das Senden des DMRS zu verwenden ist, aufweist.

9. Verfahren nach Anspruch 7, das weiterhin aufweist:
Identifizieren eines zweiten UE, das für eine DMRS-Sendung in dem ersten TTI zu konfigurieren ist,
Identifizieren, jeweils für das erste UE und das zweite UE, von verschiedenen zyklischen Verschiebungen, die auf die entsprechenden DMRS-Sendungen anzuwenden sind, und
Senden der DMRS-Konfiguration und der zyklischen Verschiebung, die auf die DMRS-Sendung anzuwenden sind, an das zweite UE.

10. Verfahren nach Anspruch 7, wobei die DMRS-Konfiguration für das erste TTI eine DMRS-Sendung für eine Aufwärtsstrecke-Sendung durch das erste UE in einem zweiten TTI vorsieht.

11. Verfahren nach Anspruch 10, wobei das erste TTI in einem ersten Funksubrahmen positioniert ist und das zweite TTI in einem zweiten Funksubrahmen positioniert ist.

12. Verfahren nach Anspruch 7, wobei das erste TTI das DMRS-Symbol und das eine oder die mehreren Datensymbole.

13. Eine Vorrichtung (905) für drahtlose Kommunikation, die entsprechende Mittel zum Durchführen der entsprechenden Schritte nach den Ansprüchen 7-12 aufweist.

## Revendications

1. Un procédé (1900) de communication sans fil, comprenant :
la réception (1905) d'une attribution de ressources en liaison montante à partir d'une station de base pour un premier intervalle de temps de transmission, TTI, le premier TTI comprenant deux ou plus symboles de multiplexage par répartition orthogonale de la fréquence, OFDM, à l'intérieur d'un intervalle de temps d'une sous-trame,
l'identification (1910) d'une configuration de signal de référence de démodulation, DMRS, pour le premier TTI, et
la transmission (1915) d'un DMRS à la station de base au moyen des ressources en liaison montante attribuées en fonction au moins en partie de la configuration DMRS,
**caractérisé en ce que** le premier TTI comprend deux symboles OFDM ou trois symboles OFDM, et où la configuration DMRS indique un modèle formé à partir d'un symbole DMRS et d'un ou de plusieurs symboles de données pour le premier TTI.

2. Le procédé selon la Revendication 1, où la configuration DMRS indique un emplacement de symbole OFDM à l'intérieur du premier TTI qui est à utiliser pour la transmission du DMRS.

3. Le procédé selon la Revendication 1, comprenant en outre :
l'identification, en fonction au moins en partie de l'attribution de ressources en liaison montante, d'un décalage cyclique qui est à appliquer au DMRS.

4. Le procédé selon la Revendication 1, comprenant en outre :
dans le cas où le premier TTI comprend trois symboles OFDM, la détermination que l'attribution de ressources en liaison montante comprend un symbole nul et un symbole DMRS à l'intérieur du premier TTI.

5. Le procédé selon la Revendication 1, où le premier TTI comprend le symbole DMRS et les un ou plusieurs symboles de données

6. Un appareil (1305) de communication sans fil comprenant des moyens respectifs pour exécuter les étapes respectives des Revendications 1 à 5.

7. Un procédé (1600) de communication sans fil, comprenant :
l'attribution (1605) de ressources en liaison montante destinées à un premier équipement d'utilisateur, UE, dans un premier intervalle de temps de transmission, TTI, le premier TTI comprenant deux ou plus symboles de multiplexage par répartition orthogonale de la fréquence, OFDM, à l'intérieur d'un intervalle de temps d'une sous-trame,
l'identification (1610) d'une configuration de signal de référence de démodulation, DMRS, pour le premier TTI à partir d'une pluralité de configurations DMRS, où la configuration DMRS identifiée comprend un emplacement de symbole OFDM à l'intérieur du premier TTI qui est à utiliser par le premier UE pour une transmission DMRS, et
la transmission (1615) d'un octroi en liaison montante destiné à une transmission en liaison montante vers le premier UE, l'octroi en liaison montante comprenant une indication des ressources en liaison montante attribuées pour le premier TTI et la configuration DMRS,
**caractérisé en ce que** le premier TTI comprend deux symboles OFDM ou trois symboles OFDM, et
où la configuration DMRS indique un modèle formé à partir d'un symbole DMRS et d'un ou de plusieurs symboles de données pour le premier TTI.

8. Le procédé selon la Revendication 7, où l'octroi en liaison montante comprend en outre une indication d'un décalage cyclique à utiliser par le premier UE de façon à transmettre le DMRS.

9. Le procédé selon la Revendication 7, comprenant en outre :
l'identification d'un deuxième UE qui est à configurer pour une transmission DMRS dans le premier TTI,
l'identification, pour chaque UE parmi le premier UE et le deuxième UE, de décalages cycliques différents qui sont à appliquer à leurs transmissions DMRS respectives, et
la transmission de la configuration DMRS et du décalage cyclique à appliquer à la transmission DMRS vers le deuxième UE.

10. Le procédé selon la Revendication 7, où la configuration DMRS pour le premier TTI fournit une transmission DMRS pour une transmission en liaison montante par le premier UE dans un deuxième TTI.

11. Le procédé selon la Revendication 10, où le premier TTI est situé à l'intérieur d'une première sous-trame et le deuxième TTI est situé à l'intérieur d'une deuxième sous-trame.

12. Le procédé selon la Revendication 7, où le premier TTI comprend le symbole DMRS et les un ou plusieurs symboles de données.

13. Un appareil (905) de communication sans fil comprenant des moyens respectifs pour exécuter les étapes respectives des Revendications 7 à 12.
